# EUROPÄISCHE PATENTSCHRIFT

(11) **EP 2 526 580 B1**
(45) Veröffentlichungstag und Bekanntmachung des Hinweises auf die Patenterteilung: **19.03.2014**
(21) Anmeldenummer: 10796291.2
(22) Anmeldetag: 21.12.2010
(51) Int. Cl.: H01M 2/10, H01M 2/20, H01M 10/04, H01M 6/42, H01M 10/0525

(54) **ELEKTROENERGIEEINHEIT UND DISTANZSTÜCK**
ELECTRICAL ENERGY UNIT AND SPACER
UNITÉ D'ÉNERGIE ÉLECTRIQUE ET PIÈCE D'ÉCARTEMENT

(30) Priorität: 19.01.2010 DE 102010005017
(43) Veröffentlichungstag der Anmeldung: 28.11.2012
(73) Patentinhaber: Li-Tec Battery GmbH, 01917 Kamenz (DE)
(72) Erfinder: SCHAEFER, Tim, 99768 Harztor (DE); HOHENTHANNER, Claus-Rupert, 63457 Hanau (DE)
(74) Vertreter: Wallinger, Michael
(86) Internationale Anmeldenummer: PCT/EP2010/007844
(87) Internationale Veröffentlichungsnummer: WO 2011/088881

(56) Entgegenhaltungen:
- EP-A2- 1 487 031
- EP-A2- 1 523 051
- WO-A2-2010/081704
- JP-A- 2007 087 907

## Beschreibung

Die vorliegende Erfindung betrifft eine Elektroenergieeinheit, die aus mehreren zu einem Block gestapelten Elektroenergiezellen besteht, und ein Distanzstück zur Verwendung zwischen Stromableitern der Elektroenergiezellen.

Es ist bekannt, Elektroenergieeinheiten aus mehreren zu einem Block gestapelten Elektroenergiezellen zusammenzusetzen, wie etwa Batterien aus galvanischen Primärzellen, Akkumulatoren aus galvanischen Sekundärzellen, gestapelte und zu Modulen zusammengefasste Kondensatoren und Brennstoffzellen.

Es sind insbesondere Batterien (Primärspeicher) und Akkumulatoren (Sekundärspeicher) zur Speicherung elektrischer Energie bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und somit gespeichert wird und in denen bei Anlegen eines elektrischen Verbrauchers chemische Energie in einer elektrochemischen Entladereaktion in elektrische Energie umwandelt wird. Dabei werden Primärspeicher in der Regel nur ein Mal aufgeladen und sind nach Entladung zu entsorgen, während Sekundärspeicher mehrere (von einigen 100 bis über 10.000) Zyklen von Aufladung und Entladung erlauben. Es ist dabei anzumerken, dass auch Akkumulatoren bisweilen als Batterien bezeichnet werden, wie etwa Fahrzeugbatterien, die bekanntlich häufige Ladezyklen erleben.

In den letzten Jahren gewinnen Primär- und Sekundärspeicher auf der Basis von Lithiumverbindungen an Bedeutung. Diese weisen eine hohe Energiedichte und thermische Stabilität auf, liefern eine konstante Spannung bei geringer Selbstentladung und sind frei von dem sogenannten Memory-Effekt.

Es ist bekannt, Energiespeicher und insbesondere Lithium-Batterien und -Akkumulatoren in der Form dünner Platten herzustellen. Zum Funktionsprinzip einer Lithium-Ionen-Zelle wird beispielhaft auf Dr. K. C. Möller, Dr. M. Winter, "Primäre und wiederaufladbare Lithium-Batterien und -Akkumulatoren" zum Praktikum Anorganisch-Chemische Technologie, TU Graz, Februar 2005 verwiesen.

Um die in der Praxis, etwa bei Automobilbatterien oder anderen Fahrzeugbatterien, angestrebten Spannungen und Kapazitäten zu erzielen, ist es erforderlich, mehrere Zellen zu einem Stapel anzuordnen und ihre Ableiter auf geeignete Weise zusammenzuschalten. Die Verschaltung der Einzelzellen erfolgt üblicherweise auf einer (in der Regel als "oben" definierten) Schmalseite der Zellen, aus der die Ableiter abragen. Aus der WO 2008/128764 A1, der WO 2008/128769 A1, WO 2008/128770 A1 und der WO 2008/128771 A1 sind derartige Verschaltungsanordnungen bekannt.

Aus der JP 07-282841 A ist eine ähnliche Anordnung bekannt, bei der die Einzelzellen in ein Gehäuse eingesetzt sind. Hier stehen die Einzelzellen lose in einzelnen Abteilungen eines Gehäuses, und die oben herausragenden Kontakte sind mittels Bolzen miteinander verbunden. Die ganze Anordnung ist dann mit einem Deckel von oben verschlossen.

Die japanische Offenlegungsschrift JP 2007 087907 A1 offenbart ein Batteriegehäuse, bei welchem die Ableiter der flachen Batteriezellen mittels einer Andruckvorrichtung aneinander gedrückt und eine elektrische Verbindung zwischen den Ableitern aufgebaut wird.

Aus einer Entwicklung ist es bekannt, mehrere dünne, quaderförmige galvanische Zellen so zu einem oder mehreren Stapeln zusammenzufassen, dass ihre Seiten größter Ausdehnung (Flachseiten) einander zugewandt sind oder berühren, und so in einer Halteeinrichtung eingegossen sind.

Es ist den Erfindern auch eine druckschriftlich nicht näher belegte Anordnung bekannt, bei der mehrere flache Zellen zwischen zwei Druckplatten gestapelt sind, wobei der Stapel durch Zugstäbe (Schraubbolzen bzw. Zylinderschrauben), die sich zwischen den Druckplatten erstrecken, zusammengehalten werden.

Es ist eine Aufgabe der vorliegenden Erfindung, eine Elektroenergieeinheit aus mehreren Elektroenergiezellen zu schaffen, mit welchen die Blockbildung und Kontaktierung der Zellen verbessert werden kann.

Die Aufgabe wird durch die Merkmale des Anspruchs 1 löst. Vorteilhafte Weiterbildungen der Erfindung bilden den Gegenstand der Unteransprüche.

Eine Elektroenergieeinheit nach einem ersten Gesichtspunkt der Erfindung weist eine Mehrzahl von Elektroenergiezellen auf, die in einer Stapelrichtung zu einem Zellblock gestapelt und innerhalb des Zellblocks parallel und/oder in Reihe miteinander verschaltet sind, wobei die Elektroenergiezellen flächig ausgebildete Ableiter aufweisen, die zueinander flächenparallel von der Zelle abragen, wobei die Hauptflächen der Ableiter senkrecht zu der Stapelrichtung ausgerichtet sind, wobei die Ableiter einer Zelle einander in Stapelrichtung gesehen wenigstens teilweise nicht verdecken, wobei jeder Ableiter einer Zelle jeweils einen Ableiter einer in Stapelrichtung folgenden Zellen in Stapelrichtung gesehen wenigstens teilweise verdeckt. Sie zeichnet sich dadurch aus, dass die elektrische Verschaltung zwischen gegenüberliegenden Ableitern durch Durchkontaktierungseinrichtungen aufweisende durchkontaktierende Distanzstücke hergestellt wird, die in Zwischenräumen zwischen Ableitern aufeinanderfolgender Zellen angeordnet sind, wobei die Distanzstücke durch eine Druckkraft mittels einer Spanneinrichtung zwischen den Ableitern eingeklemmt werden, wobei die Spanneinrichtung vollständig außerhalb der Ableiter angeordnet ist, und das die Durchkontaktierungseinrichtungen einen elektrisch leitenden Durchkontaktierungsbolzen aufweisen, welcher in einer Axialbohrung des Distanzstückes aufgenommen ist und welcher sich über die gesamte Länge des Distanzstückes erstreckt.

Unter einer Elektroenergieeinheit ist im Rahmen der Erfindung ein Bauteil zu verstehen, das auch in der Lage ist, elektrische Energie abzugeben. Unter einer Elektroenergiezelle ist im Rahmen der Erfindung eine konstruktiv in sich abgeschlossene Zelle zu verstehen, die auch in der Lage ist, elektrische Energie abzugeben. Es kann sich dabei um eine galvanische Primärzelle handeln, welche die in ihr gespeicherte Energie nur einmal abgeben kann, oder um eine galvanische Sekundärzelle, die mehrmals aufgeladen und entladen werden kann, oder um eine Brennstoffzelle oder um eine Kondensatorzelle oder dergleichen. Es kann sich insbesondere um eine galvanische Sekundärzelle handeln, wobei wenigstens ein elektromagnetisch aktives Material der Zelle Lithium oder eine Lithiumverbindung aufweist. Durch geeignete elektrische Verschaltung bilden die Elektroenergiezellen eine Elektroenergieeinheit. Unter einem Ableiter ist im Rahmen der Erfindung ein von außen zugänglicher Anschluss zu verstehen, der mit den elektrochemisch aktiven Teilen im Inneren der galvanischen Zelle in Verbindung steht und auch als ein Pol der Zelle dient. Unter einem flächigen Körper ist im Rahmen der Erfindung ein Körper zu verstehen, der zwei parallele Hauptflächen aufweist und dessen Ausdehnung in zwei zu den Hauptflächen parallelen Raumrichtungen eines körpergebundenen, kartesischen Koordinatensystems wesentlich größer als in der dritten Raumrichtung ist; dabei ist die dritte Raumrichtung als Dickenrichtung des Körpers definiert. Unter einem Distanzstück wird im Sinne der Erfindung ein Bauelement verstanden, dessen Ausdehnung in Stapelrichtung der Batterie dem Abstand zwischen zwei Ableitern aufeinander folgender Speicherzellen entspricht. Ein Distanzstück sollte beide Ableiter leicht berühren und locker zwischen diesen verschiebbar sein und sich bei flächennormalem Druck von außen auf die Ableiter zwischen diesen verklemmen. Unter einem Durchkontaktieren wird im Sinne der Erfindung ein Herstellen einer elektrischen Verbindung zwischen den gegenüberliegenden Ableitern verstanden.

Eine Elektroenergieeinheit nach diesem Gesichtspunkt der Erfindung weist auch den Vorteil auf, dass die Distanzstücke nur locker zwischen den Ableitern platziert werden müssen und durch einen einzigen Spannvorgang zwischen den Ableitern gesichert werden. Es ist z. B. nicht erforderlich, Verbindungselemente zwischen Ableitern einzeln zu sichern. Die Distanzstücke können auch bei gelöster Spanneinrichtung entfernt und ausgetauscht werden, ohne den gesamten Zellblock demontieren zu müssen. Umgekehrt können bei geeigneter Ausbildung und Halterung der Distanzstücke einzelne Zellen entfernt und ausgetauscht werden, ohne den gesamten Zellblock demontieren zu müssen.

Die Elektroenergieeinheit kann sich ferner dadurch auszeichnen, dass die Spanneinrichtung Krafterzeugungselemente zum Erzeugen einer Kraft aufweist, wobei die Krafterzeugungselemente direkt in Stapelrichtung auf die Anordnung von Ableitern und Distanzstücken wirken.

Die Elektroenergieeinheit kann sich ferner dadurch auszeichnen, dass die Spanneinrichtung Krafterzeugungselemente zum Erzeugen einer Kraft und Kraftübertragungselemente aufweist, wobei die Kraftübertragungselemente die von den Krafterzeugungselementen ausgeübte Kraft auf die Anordnung von Ableitern und Distanzstücken übertragen.

Die Elektroenergieeinheit kann sich ferner dadurch auszeichnen, dass die Spanneinrichtung Zugstäbe, die an den Ableitern vorbei über die Länge des Stapels verlaufen, und Klemmelemente aufweist, wobei die Klemmelemente eine von den Zugstäben ausgeübte Kraft auf eine die Ableiter schneidende Ebene übertragen.

Eine solche Elektroenergieeinheit kann so aufgebaut sein, dass die Zugstäbe durch Bohrungen in den Distanzstücken hindurch verlaufen.

Die Elektroenergieeinheit kann sich ferner dadurch auszeichnen, dass die Spanneinrichtung wenigstens einen Steller aufweist, wobei eine Stellkraft des Stellers direkt oder über Hebel, Gelenke oder dergleichen in Stapelrichtung von außen auf die Anordnung von Ableitern und Distanzstücken wirkt.

Eine solche Elektroenergieeinheit kann so aufgebaut sein, dass der Steller mechanisch, insbesondere manuell, oder elektromotorisch, elektromagnetisch, hydraulisch, pneumatisch, piezoelektrisch ansteuerbar ist.

Die Elektroenergieeinheit kann sich ferner dadurch auszeichnen, dass ein an einen Ableiter grenzendes Distanzstück eine Abgreifeinrichtung aufweist, welche eine elektrische Verbindung mit dem Ableiter herstellt.

Eine solche Elektroenergieeinheit kann so aufgebaut sein, dass die Abgreifeinrichtung an einem einseitig kontaktierenden Distanzstück vorgesehen ist, welches ein nicht durchkontaktierendes Distanzstück ist. Unter einem einseitig kontaktierenden Distanzstück wird ein Distanzstück verstanden, welches eine elektrische Verbindung nur zu einer einzigen Seite des Distanzstücks herstellt. Ein solches einseitig kontaktierendes Distanzstück kann jeweils am ersten und letzten Ableiter (Pol) einer Reihenschaltung von Speicherzellen angeordnet sein, um die Polspannung (das Nennpotential) der Reihenschaltung abzugreifen. Ein solches einseitig kontaktierendes Distanzstück, welches ein nicht durchkontaktierendes Distanzstück ist, kann auch verwendet werden, um innerhalb eines Zellblocks zwei Gruppen von Zellen, die untereinander in Reihe geschaltet sind, miteinander parallel zu verschalten. Ist die Abgreifeinrichtung dagegen an einem durchkontaktierenden Distanzstück vorgesehen, können Zwischenpotentiale im Zellblock abgegriffen werden.

Die Elektroenergieeinheit kann sich ferner dadurch auszeichnen, dass ein erster Anschlusspol und ein zweiter Anschlusspol der Elektroenergieeinheit vorgesehen sind, wobei der erste Anschlusspol mit einem Ableiter einer ersten Polarität der ersten Zelle in dem Zellblock verbunden ist, und wobei der zweite Anschlusspol mit einem Ableiter einer zweiten Polarität der letzten Zelle in dem Zellblock verbunden ist. Unter einem Anschlusspol ist im Sinne der Erfindung ein Kontakt zu verstehen, der auch von außerhalb der Elektroenergieeinheit kontaktierbar ist, sodass eine elektrische Verbindung herstellbar ist.

Eine solche Elektroenergieeinheit kann so aufgebaut sein, dass die Zellen in Stapelrichtung mit abwechselnder Polrichtung angeordnet sind. Auf diese Weise ist besonders einfach eine Reihenschaltung der Zellen durch die leitenden und nichtleitenden Distanzstücke realisierbar, indem diese einfach im Wechsel zwischen aufeinanderfolgenden Ableitern angeordnet werden. Auch Parallelschaltungen sind einfach realisierbar, wie oben im Zusammenhang mit einseitig kontaktierenden Distanzstücken beschrieben. Parallelschaltungen können auch durch gleichsinnige Polrichtung von Zellen verwirklicht werden, von denen jeweils gleiche Pole mittels durchkontaktierender Distanzstücke verbunden sind. Reihenschaltungen von Gruppen aus jeweils mehreren parallel geschalteten Zellen können dadurch verwirklicht werden, dass die Zellen aufeinander folgender Gruppen jeweils mit unterschiedlicher Polrichtung angeordnet sind und zwischen der letzten Zelle einer Gruppe und der ersten Zelle der nächsten Gruppe ein durchkontaktierendes und ein nicht kontaktierendes Distanzstück eingesetzt werden.

Eine solche Elektroenergieeinheit kann so aufgebaut sein, dass der Zellblock aus den mehreren Zellen zwischen zwei Druckplatten eingespannt ist, wobei die Druckplatten, vorzugsweise mittels Zuganker, verspannt sind. Auf diese Weise können die Zellen einfach und zuverlässig zusammengefasst und fixiert werden.

Die Elektroenergieeinheit kann sich ferner dadurch auszeichnen, dass die Elektroenergiezellen galvanische Zellen, vorzugsweise eine Sekundärzellen sind, wobei insbesondere ein elektromagnetisch aktives Material der Zellen Lithium oder eine Lithiumverbindung aufweist.

Nach einem weiteren Gesichtspunkt wird ein Distanzstück zur Verwendung zwischen Ableitern zweier aufeinanderfolgender Elektroenergiezellen in einem Zellstapel vorgeschlagen, wobei das Distanzstück aus einem elektrisch nicht leitenden Material hergestellt ist, zwei parallele Stirnflächen im Abstand des Zwischenraums zwischen den Ableitern, wenigstens eine erste Aufnahmeeinrichtung zum Aufnehmen eines Kontaktelements zur elektrischen Kontaktierung an wenigstens einer der Stirnflächen, und eine zweite Aufnahmeeinrichtung zum Aufnehmen eines Anschlusselements zum Herstellen einer elektrischen Verbindung mit dem Kontaktelement von einer von den Stirnflächen verschiedenen Fläche des Distanzstücks aus aufweist.

Als ein Kontaktelement wird jede Vorrichtung oder konstruktive Gestaltung oder jeder Bauteilabschnitt verstand, der ausgelegt und eingerichtet ist, einen elektrischen Kontakt zu einer einer Stirnfläche des Distanzstücks gegenüberliegenden Fläche herzustellen. Als eine Aufnahmeeinrichtung wird jede Vorrichtung oder konstruktive Gestaltung verstanden, die zur Aufnahme eines Kontaktelements ausgelegt und eingerichtet ist.

Nach einem weiteren Gesichtspunkt wird ein Distanzstück zur Verwendung zwischen Ableitern zweier aufeinanderfolgender Elektroenergiezellen in einem Zellstapel vorgeschlagen, wobei das Distanzstück einen Mittelabschnitt aus einem elektrisch nicht leitenden Material sowie zwei den Mittelabschnitt sandwichartig und parallel einfassende Außenabschnitte aus einem elektrisch leitenden Material aufweist, wobei die Außenabschnitte Stirnflächen des Distanzstücks definieren, wobei der Abstand zwischen den Stirnflächen dem Abstand eines Zwischenraums zwischen Ableitern zweier in dem Zellstapel aufeinanderfolgender Elektroenergiezellen entspricht, wobei in anderen Außenflächen als den beiden Stirnflächen wenigstens zwei Vertiefungen vorgesehen sind, wobei eine der Vertiefungen eine Verbindung zu einem der Außenabschnitte, aber keine Verbindung zu dem anderen der Außenabschnitte aufweist, und wobei und die andere Vertiefungen eine Verbindung zu dem anderen der Außenabschnitte, aber keine Verbindung zu dem einen der Außenabschnitte aufweist, wobei die Vertiefungen in anderen als den Stirnflächen ausgebildet sind.

Als eine Vertiefung wird im Sinne der Erfindung eine Bohrung, Ausschachtung oder sonstige Ausbildung verstanden, die von einer Fläche (einer anderen Fläche als den Stirnflächen) aus in das Distanzstück eingearbeitet ist.

Ein solches Distanzstück kann mit den Stirnflächen, die durch die Außenabschnitte definiert sind, an den Stromableitern aufeinander folgender Speicherzellen anliegen. Da die Außenabschnitte durch den nichtleitenden Mittelabschnitt elektrisch voneinander isoliert sind, besteht keine Verbindung zwischen den Stromableitern. Durch Überbrückung zwischen den Vertiefungen kann aber eine elektrisch leitende Verbindung zwischen den Außenabschnitten geschaffen werden, sodass eine Durchkontaktierung zwischen den Stromableitern hergestellt wird. Andererseits kann über eine der Vertiefungen eine Verbindung zu einem der Außenabschnitte hergestellt werden und damit das Potential des dort anliegenden Stromableiters abgegriffen werden.

Es können mehr als zwei solcher Vertiefungen vorgesehen sein.

Die in den Ansprüchen genannten und weitere Merkmale, Aufgaben und Vorteile der vorliegenden Erfindung werden aus der nachstehenden Beschreibung bevorzugter Ausführungsbeispielen deutlicher ersichtlich werden, die unter Bezugnahme auf die beigefügten Zeichnungen angefertigt wurde.

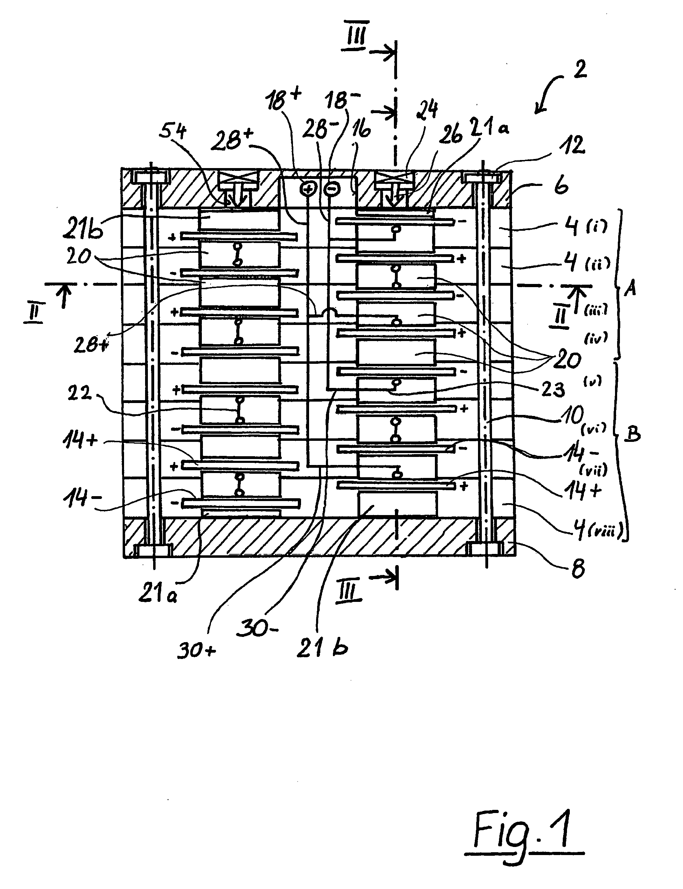

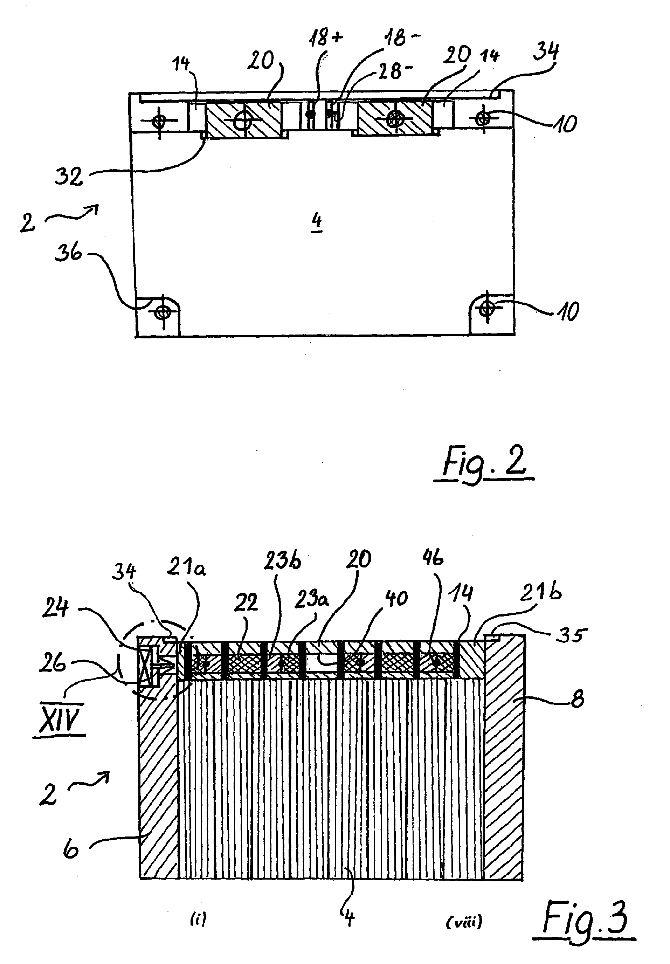

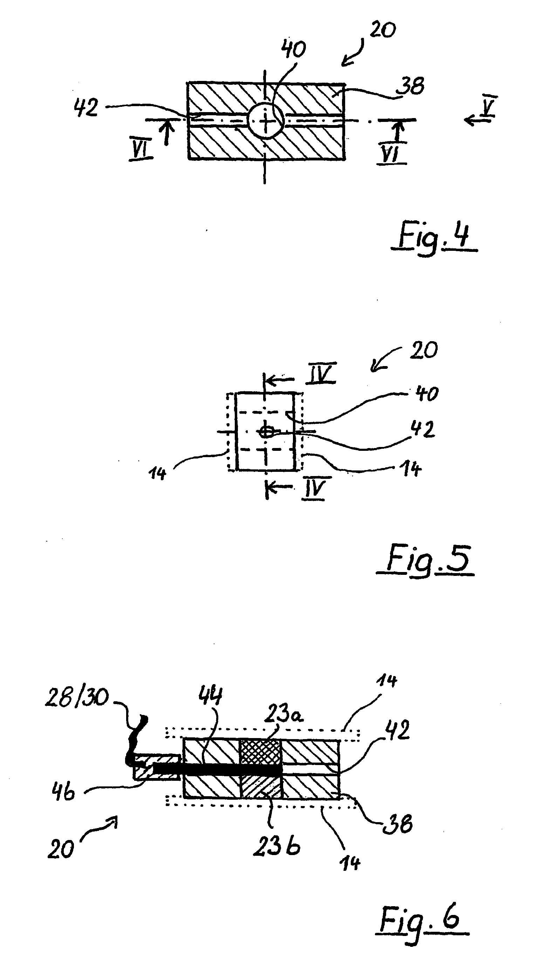

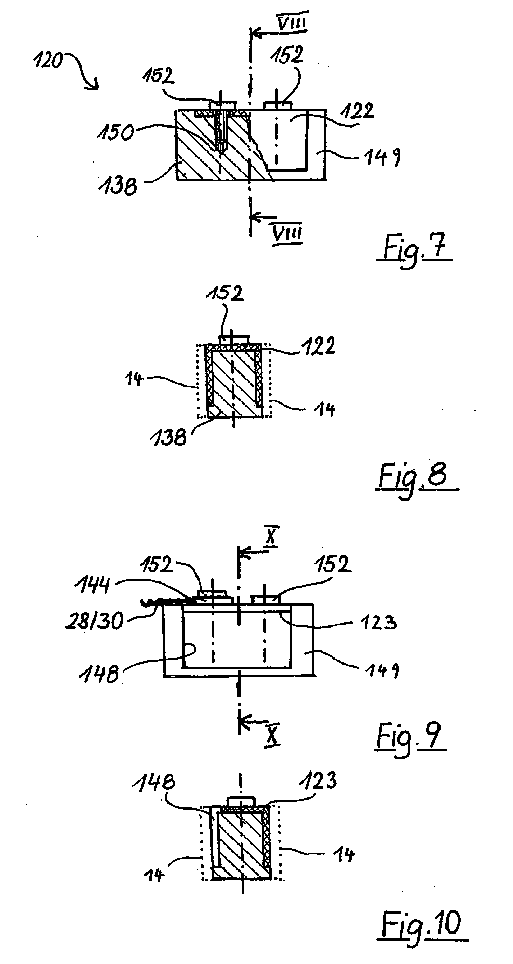

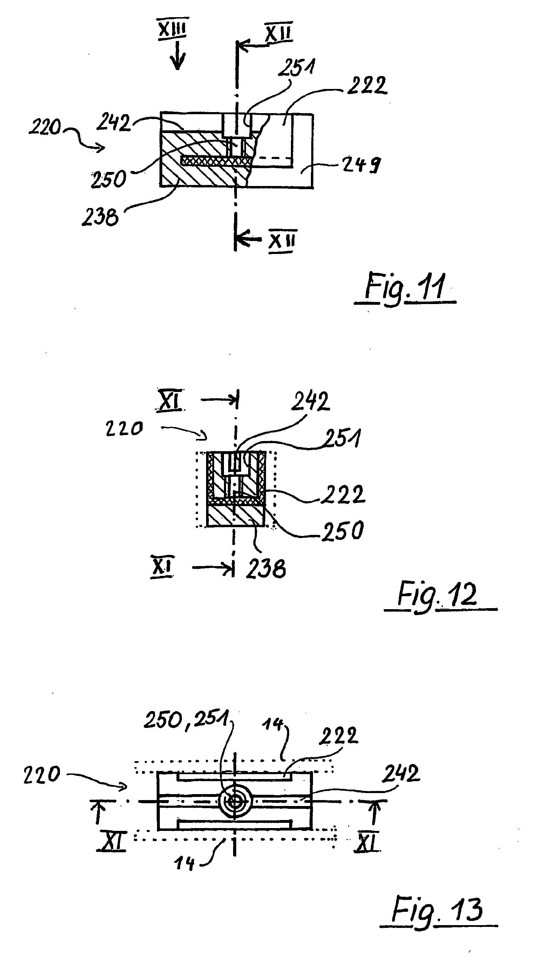

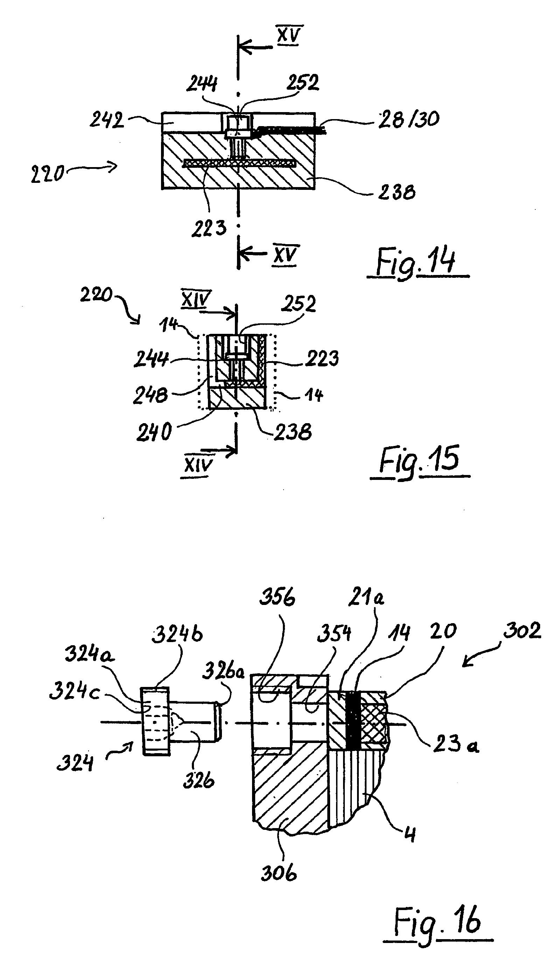

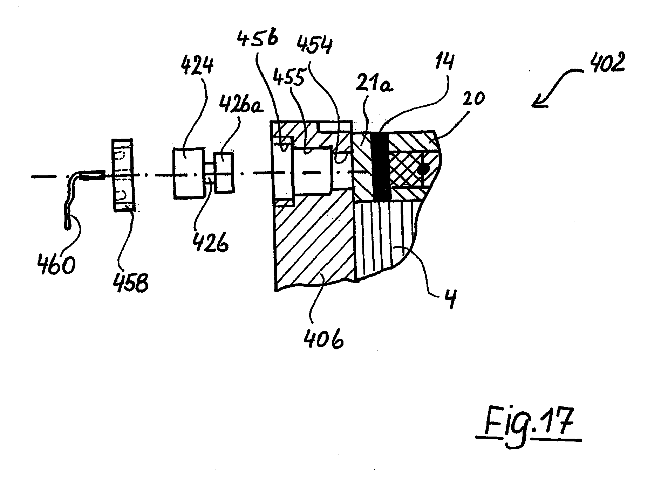

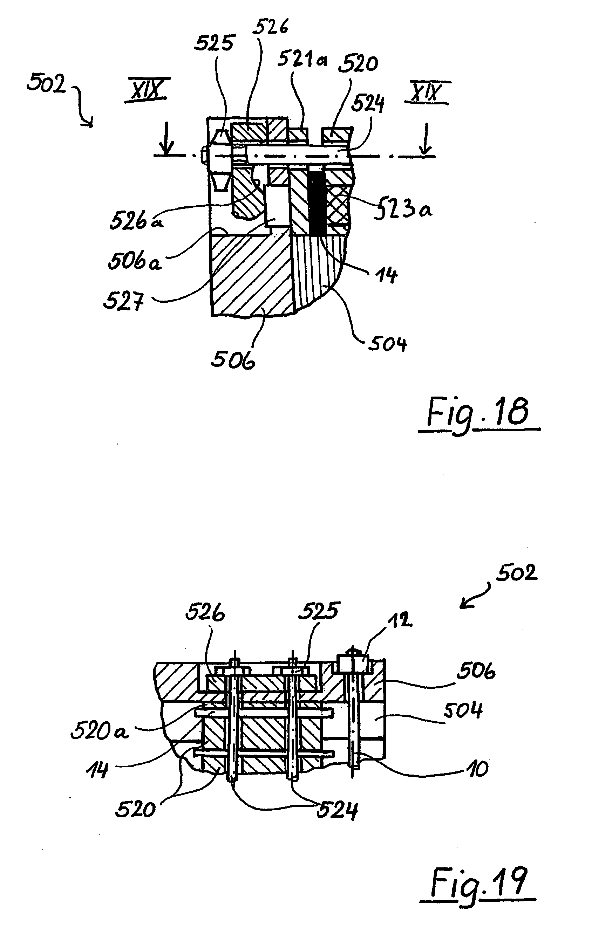

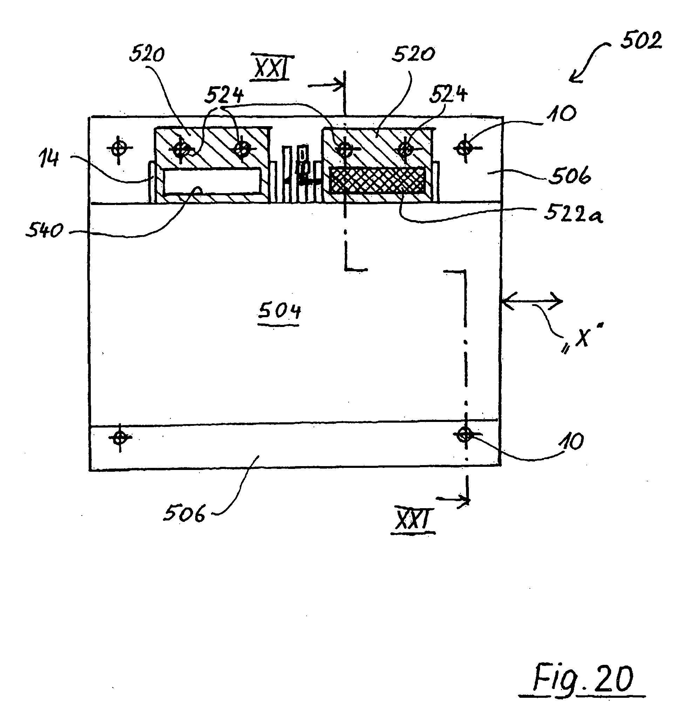

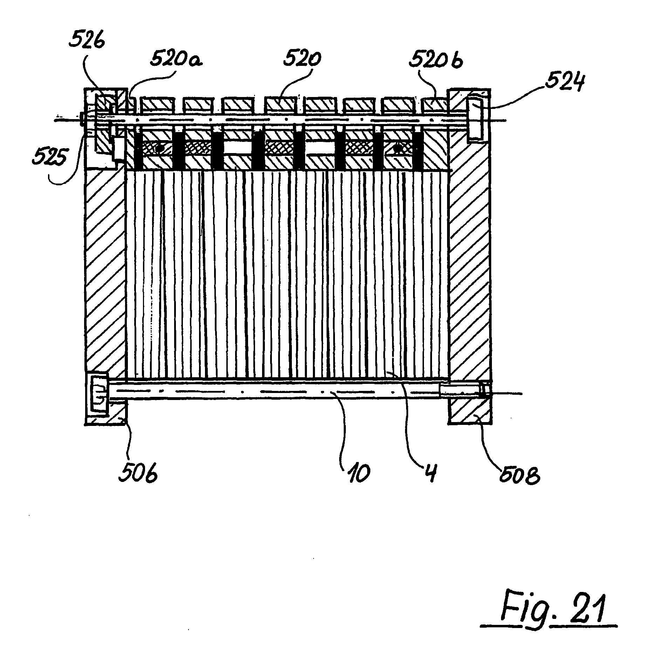

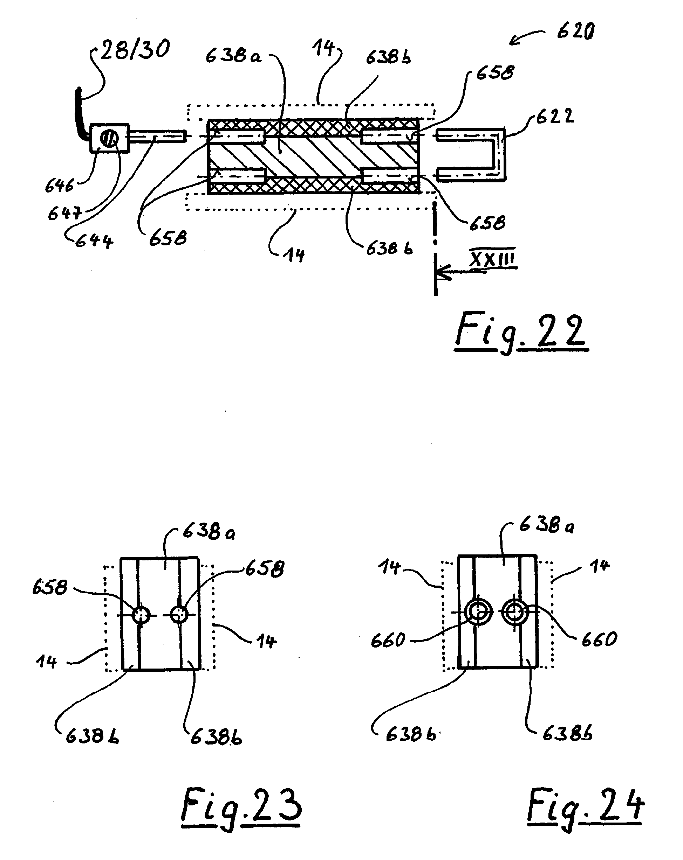

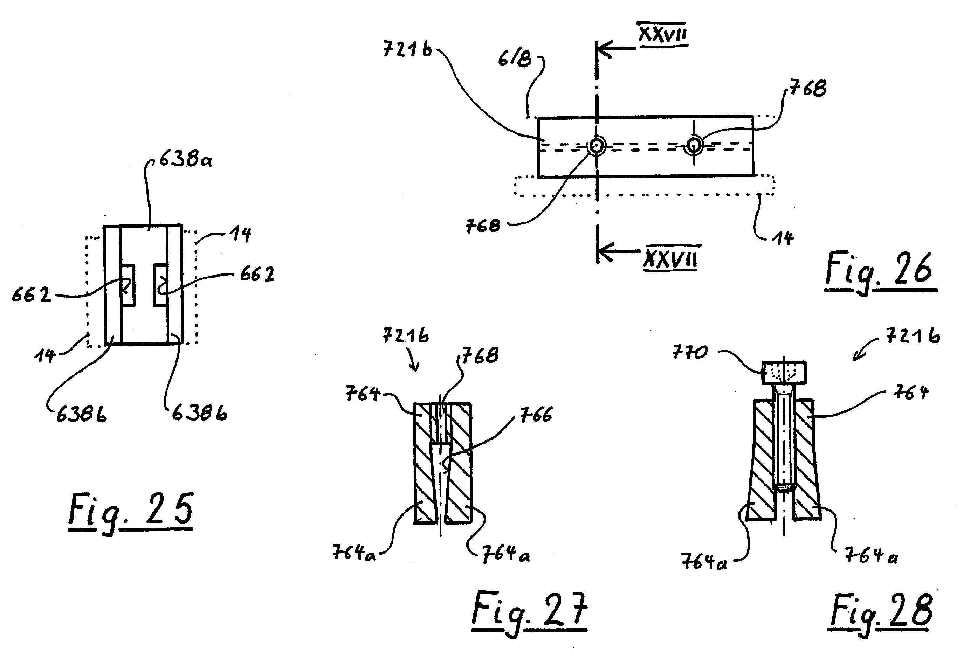

In den Zeichnungen:
ist Fig. 1 eine teilweise geschnittene Draufsicht einer Batterie als ein erstes Ausführungsbeispiel der Erfindung;
ist Fig. 2 eine Querschnittsansicht der Batterie von Fig. 1, geschnitten entlang einer Linie II-II in Fig. 1 zwischen zwei Batteriezellen in Blickrichtung zugehöriger Pfeile;
ist Fig. 3 eine Längsschnittansicht der Batterie von Fig. 1, geschnitten entlang einer Linie III-III in Fig. 1 auf Höhe einer Reihe von Ableitern und Distanzstücken in Blickrichtung zugehöriger Pfeile;
ist Fig. 4 eine vergrößerte Darstellung eines Distanzstücks von Fig. 3 in einer Querschnittsansicht durch eine Mittelebene entlang einer Linie IV-IV in Fig. 3, ohne Einbauteile in Blickrichtung zugehöriger Pfeile;
ist Fig. 5 eine Seitenansicht des Distanzstücks von Fig. 4 in Blickrichtung eines Pfeils V in Fig. 4;
ist Fig. 6 eine Horizontalschnittansicht des Distanzstücks von Fig. 4, geschnitten auf Höhe von Quer- und Axialbohrungen entlang einer Linie VI-VI in Fig. 4 in Blickrichtung zugehöriger Pfeile, mit Einbauteilen in einseitig kontaktierender Konfiguration;
sind Fign. 7 und 8 Darstellungen eines Distanzstücks als ein zweites Ausführungsbeispiel in einer Teilquerschnittsansicht und einer Längsschnittansicht, mit Einbauteilen in durchkontaktierender Konfiguration;
sind Fign. 9 und 10 Darstellungen des Distanzstücks von Fign. 7 und 8 mit Einbauteilen in einseitig kontaktierender Konfiguration;
sind Fign. 11 bis 13 Darstellungen eines Distanzstücks als ein drittes Ausführungsbeispiel in einer Teilquerschnittsansicht, einer Längsschnittansicht und einer Draufsicht, mit Einbauteilen in durchkontaktierender Konfiguration;
sind Fign. 14 und 15 Darstellungen des Distanzstücks von Fign. 7 und 8 mit Einbauteilen in einseitig kontaktierender Konfiguration;
ist Fig. 16 eine vergrößerte Darstellung einer Einzelheit XVI von Fig. 3 einer Batterie in einem vierten Ausführungsbeispiel mit einer Druckschraube als einem Druckelement in teilweiser Explosionsansicht;
ist Fig. 17 eine Darstellung einer Einzelheit entsprechend Fig. 16 einer Batterie in einem fünften Ausführungsbeispiel mit einer Druckdose als einem Druckelement in teilweiser Explosionsansicht;
ist Fig. 18 eine Darstellung einer Einzelheit entsprechend Fig. 16 einer Batterie in einem sechsten Ausführungsbeispiel mit Zugankern als Druckelement in zusammengebauter Konfiguration;
ist Fig. 19 eine geschnittene Draufsicht der Einzelheit von Fig. 18, geschnitten entlang einer Linie XIX-XIX in Fig. 18 in Blickrichtung zugehöriger Pfeile;
sind Fign. 20 und 21 Darstellungen entsprechend dem Schnittverlauf von Fign. 2 und 3 der Batterie des Ausführungsbeispiels von Fign. 18 und 19;
ist Fig. 22 eine Horizontalschnittansicht eines Distanzstücks in einem siebenten Ausführungsbeispiel;
ist Fig. 23 eine Seitenansicht des Distanzstücks von Fig. 22;
sind Fign. 24 und 25 Seitenansichten eines abgewandelten Distanzstücks dieses Ausführungsbeispiels entsprechend Fig. 23;
ist Fig. 26 eine Draufsicht eines Endstücks in einem achten Ausführungsbeispiel;
ist Fig. 27 eine Längsschnittansicht des Endstücks von Fig. 26 entlang einer Linie XXVII-XXVII in Fig. 26 in Blickrichtung zugehöriger Pfeile; und
ist Fig. 28 eine Ansicht des Endstücks entsprechend Fig. 27 in einem aktivierten Zustand.

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend oder ausschließlich zu verstehen sind.

Es folgt eine genaue Beschreibung konkreter Ausführungsbeispiele und möglicher Abwandlungen hiervon anhand der beigefügten Figuren. Soweit in verschiedenen Ausführungsbeispielen gleiche Bauteile verwendet werden, sind diese mit gleichen oder entsprechenden Bezugszeichen versehen. Im Rahmen dieser Beschreibung weisen Bauteile, deren Bezugsziffer sich um eine Mehrfaches von 100 voneinander unterscheiden, gleiche oder ähnliche Funktion auf. Auf die wiederholte Erläuterung bereits im Zusammenhang mit einem Ausführungsbeispiel erläuterter Merkmale und ihrer Funktionen wird weitgehend verzichtet, soweit sich nicht aufgrund von Besonderheiten des jeweiligen Ausführungsbeispiels unterschiedliche oder weiter gehende Gesichtspunkte ergeben. Dennoch sind, soweit es nicht ausdrücklich anders angegeben oder ersichtlich technisch unsinnig ist, die Merkmale, Anordnungen und Wirkungen eines Ausführungsbeispiels und seiner Abwandlungen auch auf andere Ausführungsbeispiele und seine Abwandlungen zu übertragen.

Ein erstes, grundlegendes Ausführungsbeispiel der vorliegenden Erfindung ist in Fig. 1 schematisch dargestellt. Fig. 1 ist eine teilweise geschnittene Draufsicht einer Batterie 2 mit acht Speicherzellen 4, die zwischen zwei stirnseitigen Druckplatten 6, 8 (Stirn-Druckplatte 6, Gegendruckplatte 8) gestapelt und mittels Zugankern 10 und Muttern 12 verspannt sind. In der Figur sind die Druckplatten 6, 8 und darin enthaltene Bauteile geschnitten, nicht aber zwischen den Druckplatten 6, 8 angeordnete Bauteile. Die Position der Speicherzellen 4 innerhalb des Stapels ist mit (i) bis (viii) durchnummeriert.

Die Zuganker 10 werden auch als Blockanker 10 bezeichnet, was ihre Funktion verdeutlicht, die Speicherzellen 4 zu einem Block zu verspannen. Die Muttern 12 für die Zuganker 10 sind drehsicher, aber axial beweglich, in entsprechenden Ausnehmungen der Anschluss-Druckplatte 6 gelagert. Die Muttern 12 sind vorzugsweise Vierkantmuttern oder Sechskantmuttern. (Die Druckplatten 6, 8 können Druck auf die gesamte Fläche der Speicherzellen 4 ausüben. Sie können alternativ Druck nur auf einen ggf. verstärkten Randbereich der Speicherzellen 4 ausüben, um mechanische Belastungen innerer Teile der Speicherzellen 4 gering zu halten oder gar gänzlich zu vermeiden.)

Die Speicherzellen 4 weisen eine flachen, quaderförmigen Grundkörper mit zwei ausgedehnten Flachseiten oder Stirnseiten (Vorder- und Rückseite) und vier Schmalseiten (rechte und linke Seite, auch als Flanke bezeichnet, Ober-und Unterseite) auf. Die Speicherzellen 4 liegen jeweils mit ihren flachen Vorder- und Rückseiten aneinander auf und bilden einen Stapel. Die Stapelrichtung der Speicherzellen 4 wird im Rahmen dieser Erfindung auch als axiale Richtung der Batterie 2 bezeichnet.

Die Speicherzellen 4 sind in dieser bevorzugten Ausführungsbeispiel Lithium-Akkumulatorzellen (im Rahmen dieser Anmeldung werden auch Akkumulatoren, also Sekundärspeicher, als Batterien bezeichnet). Der Grundkörper jeder Speicherzelle 4 beherbergt einen aktiven Teil, in welchem eine elektrochemische Reaktion zur Speicherung und Abgabe elektrischer Energie (Lade- und Entladereaktion) stattfindet. Der in der Figur nicht näher dargestellte, innere Aufbau des aktiven Teils entspricht einem flachen, laminierten Stapel aus elektrochemisch aktiven Elektrodenfolien zweier Arten (Kathode und Anode), elektrisch leitenden Folien zur Sammlung und Zuleitung oder Ableitung elektrischen Stroms zu und von den elektrochemisch aktiven Bereichen, und Separatorfolien zur Trennung der elektrochemisch aktiven Bereiche der zwei Arten voneinander. Wenigstens eine der Arten elektrochemisch aktiver Elektrodenfolien weist Lithium oder eine Lithiumverbindung auf. Dieser Aufbau ist in der Technik wohlbekannt und muss hier nicht weiter vertieft werden. Als Referenz wird auf den in der Beschreibungseinleitung genannten Stand der Technik nach Möller/Winter Bezug genommen, dessen Offenbarungsgehalt insoweit vollumfänglich durch Bezugnahme eingeschlossen sei.

Von einer als Oberseite definierten Schmalseite jeder Zelle 4 ragen zwei Ableiter 14 (14+, 14-) aus dem Inneren der Zelle 4 senkrecht nach außen ab. Die Ableiter 14 stehen mit den elektrochemisch aktiven Kathoden- und Anodenbereichen im Inneren des aktiven Bereichs in Verbindung und dienen so als Kathoden- und Anodenanschlüsse der Zelle 4. Insbesondere bildet der Ableiter 14+ einen Pluspol der Zelle 4 und bildet der Ableiter 14- einen Minuspol der Zelle 4. Die Ableiter 14 sind aus einem guten Leitermaterial wie etwa Kupfer oder Aluminium hergestellt. Zur Verbesserung der Kontaktierung kann eine Beschichtung (Bedampfung, Plattierung oder dgl.) aus bspw. Silber oder Gold vorgesehen sein. Die Ableiter 14 sind flächige Gebilde, deren Breite und Höhe deutlich größer als ihre Dicke sind und deren Höhe deutlich geringer als ihre Breite ist. Sie sind auf der Oberseite der Zelle 4 im Wesentlichen flächenparallel zueinander und sowohl in Breitenrichtung als auch in Dickenrichtung versetzt angeordnet. Die Querschnitte der Ableiter 14 überlappen einander weder in stirnseitiger Ansicht noch von der Flanke aus gesehen, und ihre Projektionen weisen in jeder dieser Blickrichtungen einen Abstand voneinander auf. Die Anordnung der Ableiter 14 ist bezüglich jeder Symmetrieachse der Oberseite der Zelle 4 spiegelsymmetrisch.

Die Zellen 4 sind mit abwechselnder Polrichtung der Ableiter 14+, 14- gestapelt. Mit anderen Worten, die erste Zelle 4(i) ist in dem Zellblock so angeordnet, dass ihr negativer Ableiter 14- auf der in der Zeichnung rechten Seite liegt und ihr positiver Ableiter 14+ auf der in der Zeichnung linken Seite liegt. Die nächste Zelle 4(ii) ist mit umgekehrter Polrichtung angeordnet, nämlich so, dass ihr positiver Ableiter 14+ auf der in der Zeichnung rechten Seite liegt und ihr negativer Ableiter 14- auf der in der Zeichnung linken Seite liegt. Die Polrichtungen der weiteren Zellen 4 wechseln sich jeweils weiter ab bis zur letzten (achten) Zelle 4(viii). Somit wechseln sich in Stapelrichtung positive Ableiter 14+ und negative Ableiter 14- ab.

In der Anschluss-Druckplatte 6 ist eine Tasche 16 ausgebildet. Die Tasche 16 ist eine Ausnehmung, in welcher zwei Anschlussklemmen 18 (18+, 18-) angeordnet sind. Die Anschlussklemmen 18 sind von außen zugänglich und bilden die Pole der Batterie 2. Insbesondere bildet die Anschlussklemme 18+ einen Pluspol der Batterie 2 und bildet die Anschlussklemme 18- einen Minuspol der Batterie 2. In der Tasche 16 finden auch weitere Bauelemente (nicht näher dargestellt) zur Steuerung und Regelung der Batterie 2 und der einzelnen Zellen 4 Platz.

Zwischen den aufeinander folgenden Ableitern 14 zweier Zellen 4 sind jeweils Distanzstücke 20 angeordnet. Die Distanzstücke 20 weisen entweder eine Durchkontaktierungseinrichtung 22, eine einseitige Kontaktierungseinrichtung 23 oder keine Kontaktierungseinrichtung auf. Die Durchkontaktierungseinrichtungen 22 sind so aufgebaut, dass sie bei festem Anliegen der Ableiter 14 an beiden Seiten des Distanzstücks 20 eine elektrische Verbindung zwischen den Ableitern 14 herstellen. Die einseitigen Kontaktierungseinrichtungen 23 sind so aufgebaut, dass sie bei festem Anliegen der Ableiter 14 an beiden Seiten des Distanzstücks 20 eine elektrische Verbindung mit einem der beiden Ableiter 14 so herstellen, dass ein Abgreifen von außerhalb des Distanzstücks ermöglicht ist. Soweit in einem Distanzstück 20 weder eine Durchkontaktierungseinrichtung 22 noch eine einseitige Kontaktierungseinrichtung 23 vorhanden ist, sind die Ableiter 14 auf beiden Seiten eines Distanzstücks 20 zuverlässig elektrisch voneinander getrennt. Man kann auch sagen, ein Distanzstück 20 mit einer Durchkontaktierungseinrichtung 22 ist ein durchkontaktierendes oder durchkontaktierend konfiguriertes Distanzstück, ein Distanzstück 20 mit einer einseitigen Kontaktierungseinrichtung 23 ist ein einseitig kontaktierendes oder einseitig kontaktierend konfiguriertes Distanzstück, und ein Distanzstück 20 ohne Kontaktierungseinrichtung 22 oder 23 ist ein nicht kontaktierendes oder nicht kontaktierend konfiguriertes Distanzstück.

Zum Zwecke des Längenausgleichs sind an den Ableitern 14+, 14- der ersten und letzten Zelle 4(i), 4(viii) auf der in Stapelrichtung nach außen weisenden Seite Endstücke 21 a, 21 b angeordnet, die sich in ihrer Länge von den Distanzstücken 20 unterscheiden und die den Abstand zwischen dem jeweiligen Ableiter 14 und den Druckplatten 6, 8 überbrücken. Auf diese Weise entsteht zwischen den Druckplatten 6, 8 eine geschlossene Säule von Distanzstücken 20, Ableitern 14 und Endstücken 21 a, 21 b.

In der Anschluss-Druckplatte 6 ist jeweils ein Druckelement 24 mit einem Druckvermittlungsglied 26 so angeordnet, dass das Druckvermittlungsglied durch eine Öffnung 54 in der Anschluss-Druckplatte 6 hindurch ragt. Die Öffnungen 54 befinden sich jeweils in der Verlängerung einer der Säulen von Distanzstücken 20, Ableitern 14 und Endstücken 21a, 21b, sodass das Druckvermittlungsglied jeweils auf einem der Endstücke 21 a, 21 b aufliegt. Sobald ein Druckelement 24 aktiviert ist, übt es über das zugeordnete Druckvermittlungsglied 26 Druck auf das entsprechende Endstück 21 a, 21 b und damit auf die gesamte Säule aus Distanzstücken 20, Ableitern 14 und Endstücken 21 a, 21 b aus. Auf diese Weise wird axialer Druck von außen auf die Anordnung von Distanzstücken 20, Endstücken 21a, 21 b und Ableitern 40 ausübt, werden die Distanzstücke 20 und Endstücke 21 a, 21 b fixiert und wird eine dauerhafte Kontaktierung durch die Kontaktierungseinrichtungen 22, 23 sichergestellt.

Der genaue Aufbau der Druckelemente 24 und Druckübertragungsglieder 26 wird im Zusammenhang mit weiteren Ausführungsbeispielen genauer diskutiert. Die Bezeichnung Druckelement 24 und Druckübertragungsglied 26 bezieht sich auf die Funktionen, einerseits eine Kraft zu erzeugen und andererseits diese Kraft als Druckkraft auf eine Säule von Distanzstücken 20, Ableitern 14 und Endstücken 21a, 21b zu übertragen. Das Druckelement 24 und das Druckvermittlungsglied 26 (Fig. 1) auf jeder Seite der Batterie 2 können zu einem einzigen Bauteil zusammenfallen und z.B. durch eine einfache Zylinderschraube verwirklicht sein, die in die Anschluss-Druckplatte 6 eingeschraubt ist und von dort aus auf das Endstück 21a bzw. 21b drückt, wobei die Öffnung 54 nur eine Gewindebohrung ist. Durch geeignete Maßnahmen ist dafür zu sorgen, dass sich der Druckverbund im Betrieb nicht unbeabsichtigt lösen kann

Mehrere der Zellen 4 des vorliegenden Ausführungsbeispiels sind als Reihenschaltung miteinander verbunden. Und zwar bilden die ersten vier Zellen 4(i) bis 4(iv) eine Gruppe A und und bilden die zweiten vier Zellen 4(v) bis 4(viii) eine Gruppe B von Zellen 4, die jeweils eine Reihenschaltung bilden. Zu diesem Zweck weisen in der Gruppe A die Distanzstücke 20 zwischen dem positiven Ableiter 14+ der ersten Zelle 4(i) und dem negativen Ableiter 14- der nächsten Zelle 4 (ii), zwischen dem positiven Ableiter 14+ der Zelle 4(ii) und dem negativen Ableiter 14- der nächsten Zelle 4(iii) und zwischen dem positiven Ableiter 14+ der Zelle 4(iii) und dem negativen Ableiter 14- der letzten Zelle 4(iv) jeweils eine Durchkontaktierungseinrichtung 21 auf. Entsprechend weisen in der Gruppe B die Distanzstücke 20 zwischen dem positiven Ableiter 14+ der ersten Zelle 4(v) und dem negativen Ableiter 14- der nächsten Zelle 4 (vi), zwischen dem positiven Ableiter 14+ der Zelle 4(vi) und dem negativen Ableiter 14- der nächsten Zelle 4(vii) und zwischen dem positiven Ableiter 14+ der Zelle 4(vii) und dem negativen Ableiter 14- der letzten Zelle 4(viii) jeweils eine Durchkontaktierungseinrichtung 21 auf. Alle anderen Distanzstücke 20 sind nicht durchkontaktierend.

Die Polpotentiale der Gruppen (Reihenschaltungen) A und B der Zellen 4 der Batterie 2 werden wie folgt abgegriffen. Das Distanzstück 20 zwischen dem negativen Ableiter 14- der Zelle 4(i) (der ersten Zelle in der Gruppe A) und dem positiven Ableiter 14+ der nächsten Zelle 4(ii) ist mit einer einseitigen Kontaktierungseinrichtung 23 versehen, die auf der negativen Seite kontaktiert und über eine negative Polleitung 28- mit der negativen Anschlussklemme 18- verbunden ist. Ebenso ist das Distanzstück 20 zwischen dem negativen Ableiter 14- der Zelle 4(v) (der ersten Zelle in der zweiten Gruppe B) und dem positiven Ableiter 14+ der nächsten Zelle 4(vi) mit einer einseitigen Kontaktierungseinrichtung 23 versehen, die auf der negativen Seite kontaktiert und über eine negative Polleitung 30- mit der negativen Anschlussklemme 18- verbunden ist. Das Distanzstück 20 zwischen dem positiven Ableiter 14+ der Zelle 4(iv) (der letzten Zelle der ersten Gruppe A) und dem negativen Ableiter 14- der vorherigen Zelle 4(iii) ist mit einer einseitigen Kontaktierungseinrichtung 23 versehen, die auf der positiven Seite kontaktiert und über eine positive Polleitung 28+ mit der positiven Anschlussklemme 18+ verbunden ist. Ebenso ist das Distanzstück 20 zwischen dem positiven Ableiter 14+ der Zelle 4(viii) (der letzten Zelle der zweiten Gruppe B) und dem negativen Ableiter 14- der vorherigen Zelle 4(vii) mit einer einseitigen Kontaktierungseinrichtung 23 versehen, die auf der positiven Seite kontaktiert und über eine positive Polleitung 30+ mit der positiven Anschlussklemme 18+ verbunden ist.

Auf die beschriebene Weise können beliebige elektrische Verschaltungen der Zellen 4 in der Batterie 2 verwirklicht werden. Wenn z.B. die einseitige Kontaktierungseinrichtungen 23 in den Distanzstücken 20 der Zellen 4(iv) und 4(v) in Fig. 1 weggelassen werden und statt dessen zwischen dem positiven Ableiter 14+ der Zelle 4(iv) und dem negativen Ableiter 14- der Zelle 4(v) ebenfalls ein Distanzstück 20 mit Durchkontaktierungseinrichtung 22 eingesetzt wird, so wird eine Reihenschaltung aller Zellen in der Batterie 2 verwirklicht. Anders gesagt befinden sich zwischen den Ableitern 14 aufeinander folgender Zellen 4 abwechselnd durchkontaktierende und nicht kontaktierende Distanzstücke 20, um eine Reihenschaltung der Zellen 4 zu verwirklichen; und wo eine Trennung in Gruppen von Zellen abgegriffen werden sollen, wird eine Durchkontaktierung 22 weggelassen und sind einseitig kontaktierende Distanzstücke 20, 23 vorgesehen, die mit dem jeweiligen Batteriepol 18+, 18- verbunden sind.

In Fign. 2 und 3 ist der Aufbau der Batterie 2 nach diesem Ausführungsbeispiel genauer dargestellt. Dabei ist Fig. 2 eine Querschnittsansicht, wobei der Schnitt entlang einer Linie II-II in Fig. 1 in einer Ebene zwischen der zweiten und dritten Zelle 4(ii), 4(iii) verläuft, und ist Fig. 3 eine Längsschnittansicht, wobei der Schnitt entlang einer Linie III-III in Fig. 1 in einer Mittelebene einer Abfolge von Ableitern 14 und Distanzstücken 20, 21a, 21 b verläuft.

Gemäß der Darstellung in Fig. 2 weisen die Distanzstücke 20 einen rechteckigen Querschnitt auf und weist die Oberseite jeder Zelle 4 auf der linken und rechten Hälfte jeweils eine Vertiefung 32 auf, in welcher die Distanzstücke 20 ruhen. Sie sind dadurch in seitlicher Richtung und nach unten fixiert. Nach o-ben werden die Distanzstücke durch einen Deckel (nicht näher dargestellt) zurückgehalten, der in einem Absatz 34 der Anschluss-Druckplatte 6 und in einem Absatz 35 der Gegendruckplatte 8 ruht. An den unteren Ecken weisen die Zellen 4 Rasten 36 (Eck-Ausnehmungen) auf, in welchen die Blockanker 10 verlaufen und so eine Ausrichtung der Zellen 4 ermöglichen.

Die Schnittebene in Fig. 2 (Linie II-II in Fig. 1) schneidet die Distanzstücke 20 zwischen der zweiten und dritten Zelle 4(ii), 4(iii). Die Distanzstücke 20 sind allgemein quaderförmig; ihre Ausdehnung in axialer Richtung (Stapelrichtung der Zellen 4, senkrecht zur Zeichnungsebene in Fig. 2) entspricht dem Abstand zwischen Ableitern 14. Sie weisen eine zentrale axiale Bohrung 40 auf, die zur Aufnahme einer Durchkontaktierungseinrichtung (22) oder einer einseitigen Kontaktierungseinrichtung (23) dient und ansonsten leer bleiben kann.

Die Schnittebene in Fig. 3 (Linie III-III in Fig. 1) schneidet die Distanzstücke 20 des Druckverbunds auf der rechten Seite in Fig. 1, und zwar auf der Höhe der Bohrungen 40 in den Distanzstücken 20. Gemäß der Schaltungsanordnung in Fig. 1 weisen die Distanzstücke 20 auf dieser Seite in der Reihenfolge der deren Zelle 4(i) bis zur letzten Zelle 4(viii) eine einseitige Kontaktierungseinrichtung 23, eine Durchkontaktierungseinrichtung 22, eine einseitige Kontaktierungseinrichtung 23, keine Durchkontaktierungseinrichtung, eine einseitige Kontaktierungseinrichtung 23, eine Durchkontaktierungseinrichtung 22 und eine einseitige Kontaktierungseinrichtung 23 auf. Erfindungsgemäß sind in diesem Ausführungsbeispiel sind die Durchkontaktierungseinrichtungen 22 durch elektrisch leitende Durchkontaktierungsbolzen 22 verwirklicht, die in den Axialbohrungen 40 aufgenommen sind und die sich über die gesamte axiale Länge der Distanzstücke 20 erstrecken. Die einseitigen Kontaktierungseinrichtungen 23 sind durch jeweils einen elektrisch leitenden Kontaktbolzen 23a und einen Isolierbolzen 23b verwirklicht, die in den Axialbohrungen 40 aufgenommen sind und die zusammen so lang sind wie die gesamte axiale Länge der Distanzstücke 20. Zwischen den Kontaktbolzen 23a und Isolierbolzen 23b ist jeweils ein Kontaktstift 44 eingeklemmt, der den Kontakt nach außen ermöglicht. Wo keine Kontaktierung verwirklicht werden soll, bleibt die Axialbohrung 40 leer. Sofern aus Gründen der Stabilität erforderlich, können dort auch Bolzen aus isolierendem Material als Gegendrucklager vorgesehen sein.

Der Aufbau der Distanzstücke 20 und der Kontaktierungselemente ist in den Fign. 4 bis 6 genauer dargestellt. Fign 4 und 5 zeigen ein Distanzstück 2 zunächst ohne Kontaktierungselemente.

Fig. 4 ist eine vergrößerte Querschnittsansicht eines Distanzstücks 20, wobei die Blickrichtung der Fig. 2, also der Stapelrichtung der Zellen 4 entspricht, und wobei die Schnittebene durch die in Stapelrichtung gesehen mittlere Ebene des Distanzstücks 20 verläuft. Das Distanzstück 20 weist einen quaderförmigen Grundkörper 38 aus einem elektrisch isolierenden Material auf. Wie oben erwähnt, verläuft eine Axialbohrung 40 zentral durch das Distanzstück 20. Des Weiteren verläuft eine Querbohrung 42, ebenfalls zentral, von einer Seite des Distanzstücks 20 zur anderen. Die Querbohrung 42 verläuft zentral und horizontal durch den Grundkörper 38 und schneidet daher die Axialbohrung 40. Die Querbohrung 42 weist (ohne Beschränkung der Allgemeinheit) einen geringeren Durchmesser als die Axialbohrung 40 auf.

Fig. 5 ist eine Ansicht des Distanzstücks 20 von der Seite. In dieser Ansicht ist der Schnittverlauf der Fig. 4 durch eine Linie IV-IV verdeutlicht. Die Lage der Ableiter 14 ist mit gepunkteten Linien angedeutet.

In durchkontaktierender Konfiguration sind Durchkontaktierungsbolzen 22 (vgl. Fig. 3) in der Axialbohrung 40 eingesetzt.

Fig. 6 ist eine Horizontalschnittansicht des Distanzstücks 20 entlang Linien VI-VI in Fign. 4 und 5, mit Einbauteilen in einseitig kontaktierender Konfiguration. Auch hier ist die Lage der Ableiter 14 mit gepunkteten Linien angedeutet. Gemäß der Darstellung in Fig. 6 ist der Kontaktstift 44 von einer Seite in die Querbohrung 42 eingesetzt und sind der Kontaktbolzen 23a und der Isolierbolzen 23b von gegenüberliegenden Seiten in die Axialbohrung 40 eingesetzt, wobei sie den Kontaktstift 44 zwischen sich einklemmen. Der Kontaktdraht drückt sich in den Isolierbolzen 23b und den Kontaktbolzen 23a ein. Es kann auch eine Nut in den nach innen weisenden Stirnflächen des Isolierbolzens 23b und des Kontaktbolzens 23a vorgesehen sein, deren Form dem Querschnitt des Kontaktstifts 44 nachgebildet ist; in diesem Fall können zum Zwecke eines verdrehsicheren Einbaus die Bolzen 23a, 23b eine Nase auf der Mantelfläche aufweisen und kann in der Axialbohrung 40 des Grundkörpers 38 (des Distanzstücks 20) eine Nut vorgesehen sein, welche die Nase aufnimmt (nicht näher dargestellt). Alternativ kann der Kontaktstift 44 an seinem Ende abgeflacht sein. Durch das Einklemmen wird ein zuverlässiger elektrischer Kontakt zwischen dem Kontaktstift 44 und dem Kontaktbolzen 23a hergestellt.

Die Querbohrung 42 zur Aufnahme des Kontaktstifts 44 verläuft über die gesamte Breite des Distanzstücks 20, sodass von beiden Seiten kontaktiert werden kann. Der Kontaktstift 44 ragt seitlich aus dem Distanzstück 20 heraus und wird mit einer Buchse 46 oder dergleichen an die Polleitung 28 bzw. 30 angeschlossen. Alternativ können der Kontaktstift 44 und die Buchse 46 einen Stecker mit langem Pin verwirklichen.

Die Durchkontaktierungsbolzen 22 und Kontaktbolzen 23a sowie die Kontaktstifte 44 sind aus einem guten Leitermaterial hergestellt. Als Leitermaterial kommen Kupfer, Messing, Bronze oder dergleichen in Frage, es sind jedoch auch andere Materialien denkbar wie etwa Stahl, Aluminium, Neusilber o. a. Zur Verringerung des Übergangswiderstands zwischen Kontakten kann eine Versilberung oder Vergoldung der Kontaktflächen vorgesehen sein. Zur weiteren Intensivierung des Kontaktes können die Kontaktflächen angeraut sein.

Die Distanzstücke 20 und die Isolierbolzen 23b sind aus einem elektrisch isolierenden Material hergestellt. Als Isolatormaterial kommen Kunststoffe, Gummi, Keramik und dergleichen in Frage.

Die Distanzstücke 20 können nachgiebiger als die Bolzen 22, 23a, 23b sein, damit eine zuverlässige Druckkontaktierung zustande kommt. Die Toleranzen der Bolzen 22, 23a, 23b und Distanzstücke 20 sollten so aufeinander abgestimmt sein, dass die Bolzen 22, 23a, 23b nicht in den Distanzstücken 20 verschwinden können. Es sind auch zwei oder drei oder mehr Axialbohrungen 40 mit entsprechenden Kontaktierungselementen denkbar.

In eine nicht erfindungsgemäßen Abwandlung dieses Ausführungsbeispiels können die Bolzen durch Hülsen ersetzt werden. Hierdurch können Materialkosten und Gewicht einge-spart werden, was sich insbesondere dann auswirkt, wenn mehrere Axialbohrungen 40 mit entsprechenden Kontaktierungsmöglichkeiten vorgesehen sind. Soweit aus Gründen des Kraftflusses und zur Schonung des Materials, insbesondere zur Vermeidung von Beschädigungen der Ableiter 14 durch die Bolzen 22, 23a, 23b (oder Hülsen) erforderlich, können in den nicht kontaktierenden Distanzstücken 20 Konterbolzen (oder -hülsen) vorgesehen sein.

Fign. 7 bis 10 zeigen ein Distanzstück 120, mit Einbauteilen in durchkontaktierender und einseitig kontaktierender Konfiguration, als zweites Ausführungsbeispiel, die eine nicht erfindungsgemäße Ausführungsvariante des Distanzstücks des vorherigen Ausführungsbeispiels ist. Die Blickrichtung der Fign. 7 und 9 entspricht derjenigen in Fig. 4, wobei Fig. 7 nur in etwa halbseitig und Fig. 9 nicht geschnitten ist, und die Blickrichtung der Fign. 8 und 10 entspricht derjenigen in Fig. 5, jedoch in der Mittelebene geschnitten (vgl. die Linie VIII-VIII in Fig. 7 bzw. X-X in Fig. 9 mit zugehörigen Pfeilen).

Fign. 7 und 8 zeigen das Distanzstück 120 dieses Ausführungsbeispiels in durchkontaktierender Konfiguration. Das Distanzstück 120 weist einen quaderförmigen Grundkörper 138 aus einem elektrisch isolierenden Material auf. Der Grundkörper 138 weist an der Oberseite eine durchgehende Vertiefung 148 auf, die sich an Vorder- und Rückseite sattelartig fortsetzt. Ein U-förmiges, an die Vertiefung 148 angepasstes Kontaktblech 122 ist von oben so in die Vertiefung 148 gelegt, dass es an dem Grundkörper 138 an. Das Kontaktblech 122 wird von oben durch zwei Schrauben 152 gehalten, die in jeweiligen in dem Grundkörper 138 ausgebildeten Gewindesackbohrungen 150 eingeschraubt sind. Das U-förmige Kontaktblech 122 schafft eine elektrische Verbindung von einer Vorderseite auf die Rückseite des Distanzstücks 120 und bildet somit eine Durchkontaktierungseinrichtung im Sinne der Erfindung.

Fig. 9 und Fig. 10 zeigen das Distanzstück 120 in einseitig kontaktierender Konfiguration. In dieser Konfiguration ist ein L-förmiges Kontaktblech 123 von einer Seite in die Vertiefung 148 gelegt, wobei der lange Schenkel an einer der Stirnseiten des Distanzstücks 120 anliegt und der kurze Schenkel an der Oberseite des Distanzstücks 120 anliegt. Das L-förmige Kontaktblech 123 ragt mit seinem kurzen Schenkel über die Mitte des Distanzstücks 122 hinaus, aber nicht bis zur anderen Stirnseite, und ist mit Schrauben 152 entsprechend der durchkontaktierenden Konfiguration fixiert. Mit dem langen Schenkel liegt es an dem dortigen Ableiter (14, vgl. Fig. 2) an. Unter eine der Schrauben 152 ist ein Kontaktschuh 144 gelegt, an dem eine Polleitung 28 bzw. 30 endet. Auf der dem langen Schenkel gegenüberliegenden Seite liegt das Distanzstück 120 mit dem von der Vertiefung 148 stehen gelassenen Rand 149 auf dem dortigen Ableiter (14, vgl. Fig. 2) auf. Das L-förmige Kontaktblech 123 ermöglicht somit eine Isolierung aufeinanderfolgender Ableiter 14 und eine Abnahme des Polpotentials des Ableiters auf der Seite des langen Schenkels. Es bildet daher eine einseitige Kontaktierungseinrichtung.

Die Kontaktbleche 122, 123 sind aus einem guten Leitermaterial hergestellt; für diesbezügliche Auswahl, Alternativen und Varianten gilt das oben im Zusammenhang mit den Durchkontaktierungsbolzen 22 und Kontaktbolzen 23a des ersten Ausführungsbeispiels Gesagte.

Das Distanzstück 120 dieses Ausführungsbeispiels ersetzt das Distanzstück 20 im ersten Ausführungsbeispiel und wird wie dieses in jeweils gewünschter Konfiguration eingesetzt. In nicht kontaktierender Konfiguration liegt es auf beiden Seiten mit dem von der Vertiefung 148 stehen gelassenen Rand 149 auf den Ableitern 14 auf und stellt so den Abstand und den Klemmverbund zwischen aufeinander folgenden Ableitern 14 sicher.

Der Kabelschuh 144 kann als Ringöse oder Gabel ausgebildet sein und einen Crimp-Teil oder eine Schraubklemme für die Polleitung 28 bzw. 30 aufweisen. Der Kabelschuh 144 kann auch durch ein hakenförmig oder ösenförmig gebogenes Ende der Polleitung 28 bzw. 30 ersetzt werden.

Fign. 11 bis 15 zeigen ein Distanzstück 220 mit Einbauteilen in durchkontaktierender und einseitig kontaktierender Konfiguration als drittes Ausführungsbeispiel, welches eine nicht erfindungsgemäße Ausführungsvariante der Distanzstücke der vorherigen Ausführungsbeispiele ist.

Fig. 11 ist eine Teilquerschnittsansicht des Distanzstücks 220 dieses Ausführungsbeispiels in durchkontaktierender Konfiguration, wobei die Blickrichtung und der Schnittverlauf in etwa der Situation in Fig. 7 entspricht. Fig. 12 ist eine Längsschnittansicht des Distanzstücks 220 entlang einer Linie XII-XII in Fig. 11, gesehen in Pfeilrichtung. Fig. 13 ist eine Draufsicht des Distanzstücks 220 (vgl. Pfeil XIII in Fig. 11).

Das Distanzstück 220 weist einen quaderförmigen Grundkörper 238 aus einem elektrisch isolierenden Material auf. Der Grundkörper 238 weist einen horizontalen, durchgehenden Schlitz 240 zwischen der Vorderseite und der Rückseite sowie in der Vorder- und Rückseite jeweils eine sich von dem Schlitz 240 aus nach oben erstreckende Vertiefung 248 auf (vgl. Fig. 15). Gemäß der Darstellung in Fign. 11 bis 13 erstreckt sich ein Kontaktblech 222 durch den Schlitz 240 hindurch und verläuft beidseits an den Stirnseiten des Grundkörpers 238 weiter in den Vertiefungen 248 nach oben. (Vor der Montage liegt das Kontaktblech 222 als ebenes oder nur einseitig abgewinkeltes Halbzeug vor. Zur Montage wird es durch den Schlitz 240 geschoben und dann nach oben abgewinkelt.) Eine Fixierung des Kontaktblechs 222 durch Schrauben ist nicht erforderlich. Das Kontaktblech 222 schafft eine elektrische Verbindung von einer Stirnseite auf die andere Stirnseite des Distanzstücks 120 und bildet eine Durchkontaktierungseinrichtung im Sinne der Erfindung.

An der Oberseite weist der Grundkörper 238 des Distanzstücks 222 dieses Ausführungsbeispiels eine Quernut 242 sowie eine zentrale, bis zu dem Schlitz 240 reichende Gewindebohrung 250 mit einer zylindrischen Senkung 251 auf. Die Senkung 251 reicht geringfügig tiefer als die Quernut 242 in den Grundkörper 238 hinein.

Fig. 14 ist eine Querschnittsansicht des Distanzstücks 220 in einseitig kontaktierender Konfiguration und entspricht der Darstellung von Fig. 4, und Fig. 15 ist eine Längsschnittansicht des Distanzstücks 220 entlang einer Linie XV-XV in Fig. 14, gesehen in Pfeilrichtung.

In einseitig kontaktierender Konfiguration ist ein L-förmiges Kontaktblech 223 von einer Seite in den Schlitz 240 geschoben und in die Vertiefung 248 gelegt, wobei der lange Schenkel in der Vertiefung 248 an der Vorder- oder Rückseite des Distanzstücks 220 anliegt und der kurze Schenkel in den Schlitz 240 ragt. Das L-förmige Kontaktblech 223 ragt mit seinem kurzen Schenkel über die Mitte des Distanzstücks 122 hinaus, aber nicht bis zur gegenüberliegenden Seite, und ist mit einer in die Gewindebohrung 250 geschraubten Zylinderschraube 252 fixiert. Der Schraubenkopf verschwindet in der Senkung 251. Mit dem langen Schenkel liegt das Kontaktblech 223 an dem dortigen Ableiter 14 an. Eine Polleitung 28 bzw. 30 erstreckt sich von außerhalb des Distanzstücks 220 durch die Quernut 242 und endet in einem Kontaktschuh 244, der von der Zylinderschraube 252 mit fixiert wird. Auf der dem langen Schenkel gegenüberliegenden Seite liegt das Distanzstück 220 mit dem von der Vertiefung 248 stehen gelassenen Rand 249 (vgl. Fig. 11) auf dem dortigen Ableiter 14 auf. Das L-förmige Kontaktblech 223 ermöglicht somit eine Isolierung aufeinander folgender Ableiter 14 und eine Abnahme des Polpotentials des Ableiters auf der Seite des langen Schenkels. Es bildet somit eine einseitige Kontaktierungseinrichtung.

Die Kontaktbleche 222, 223 sind aus einem guten Leitermaterial hergestellt; für diesbezügliche Auswahl, Alternativen und Varianten gilt das oben im Zusammenhang mit den Durchkontaktierungsbolzen 22 und Kontaktbolzen 23a des ersten Ausführungsbeispiels Gesagte.

Das Distanzstück 220 dieses Ausführungsbeispiels ersetzt das Distanzstück 20 bzw. 120 im ersten oder zweiten Ausführungsbeispiel und wird wie dieses in jeweils gewünschter Konfiguration eingesetzt. In nicht kontaktierender Konfiguration liegt es auf beiden Seiten mit dem von der Vertiefung 248 stehen gelassenen Rand 249 auf und stellt so den Abstand und den Klemmverbund zwischen aufeinander folgenden Ableitern 14 sicher.

In allen Ausführungsbeispielen können bezüglich der Distanzstücke 20, 120, 220 die Durchkontaktierungseinrichtungen so ausgeführt sein, dass die Abnahme eines Zwischenpotentials an dieser Stelle möglich ist. Bei dem zweiten und dritten Ausführungsbeispiel können die vorgesehenen Schrauben 152, 252 mit Kontaktschuh 144, 244 auch zusammen mit den durchkontaktierenden Kontaktblechen 122, 222 eingesetzt werden. Beim ersten Ausführungsbeispiel können anstelle eines Durchkontaktierungsbolzens 22 zwei Kontaktbolzen 23a verwendet werden, um eine Durchkontaktierungseinrichtung mit Abnahme des Potentials auszubilden. Auf diese Weise können mehrere Nennspannungen der Batterie 2, 102, 202 etc. verwirklicht werden.

Die nachstehenden Ausführungsbeispiele betreffen Varianten in der Verwirklichung des Druckverbundes.

Fig. 16 zeigt eine vergrößerte Darstellung eines Bereichs einer Batterie 302 als ein viertes Ausführungsbeispiel entsprechend einer Einzelheit XVI in Fig. 3.

Die Batterie 302 dieses Ausführungsbeispiels entspricht in ihrem Aufbau der Batterie 2 des ersten Ausführungsbeispiels. Sie weist eine Anschluss-Druckplatte 306 auf, die der Anschluss-Druckplatte 6 des ersten Ausführungsbeispiels entspricht. Die Erzeugung der Druckkraft zur Herstellung des Klemmverbundes von Ableitern 14 und Distanzstücken 20 einschließlich Endstücken 21 a, 21 b erfolgt von der Anschluss-Druckplatte 306 aus.

Die Anschluss-Druckplatte 306 der Batterie 302 dieses Ausführungsbeispiels weist eine Durchgangsbohrung 325 auf, die auf der Höhe des Endstücks 21 a (auf der anderen Seite wäre es das Endstück 21 b) mündet. Die Durchgangsbohrung 354 weist nach außen hin eine Aufweitung mit Innengewinde 356 auf. Das Innengewinde 356 ist vorzugsweise ein Feingewinde, insbesondere ein selbsthemmendes Gewinde. Unter einem selbsthemmenden Gewinde wird hier ein Gewinde verstanden, dessen Geometrie derart ausgelegt ist, dass zum Lösen aus dem angezogenen Zustand ein hohes Drehmoment erforderlich ist und ein selbsttätiges Lösen daher unwahrscheinlich ist.

In diesem Ausführungsbeispiel werden ein Druckelement und ein Druckvermittlungsglied gemeinsam durch eine Kopfschraube 324 gebildet. Die Kopfschraube 324 weist einen Schraubenkopf 324a mit einem Kopfgewinde 324b und einem Innensechskant 324c auf. Unter einem Kopfgewinde wird hier ein Außengewinde verstanden, das in den Kopf einer Schraube eingearbeitet ist, und unter einer Kopfschraube wird eine Schraube mit Kopfgewinde verstanden. Das Kopfgewinde 324b entspricht dem Innengewinde 356 in der Anschluss-Druckplatte 306. An den Schraubenkopf 324a schließt sich ein zylindrischer Stempel 326 mit einer stirnseitigen Fase 326a an, dessen Außendurchmesser dem Durchmesser der Durchgangsbohrung 354 entspricht. Der Stempel 326 und die Durchgangsbohrung 354 können auf Passung ausgelegt sein, diese muss aber so viel Spiel aufweisen, dass die Verschraubung nicht klemmt.

Bei der Montage wird der Stempel 326 mit der Fase 326a in die Durchgangsbohrung 354 eingesetzt und sodann das Kopfgewinde 324b in das Innengewinde 356 geschraubt und angezogen, wobei das Anzugsmoment im Hinblick auf die erforderliche Druckkraft an der Stirn des Stempels 326 ausgelegt ist.

Somit bildet der Schraubenkopf 324a der Kopfschraube 324 mit dem Kopfgewinde 324b und dem Innensechskant 324c ein Druckelement, und der Stempel 326 der Kopfschraube 324 bildet ein Druckvermittlungsglied.

Anstelle der Kopfschraube 324 kann auch eine einfache Zylinderschraube oder mehrere Zylinderschrauben oder dergleichen verwendet werden. Die Verwendung einer Kopfschraube erleichtert jedoch aufgrund der kleineren realisierbaren Gewindesteigung die Ausbildung eines Gewindes mit selbsthemmenden Eigenschaften. Anstelle oder zusätzlich zur Ausbildung eines selbsthemmenden Gewindes kann nach der Montage ein Konterdeckel (nicht näher dargestellt) angebracht werden. Unter einem Konterdeckel wird hier eine kopflose Schraube verstanden, deren Länge geringer als ihr Durchmesser ist; er kann zwei exzentrische Bohrungen zur Aufnahme eines Abziehers oder dergleichen aufweisen.

Fig. 17 zeigt den gleichen Ausschnitt wie Fig. 16 für eine Batterie 402 als ein fünftes Ausführungsbeispiel.

Die Batterie 402 dieses Ausführungsbeispiels entspricht in ihrem Aufbau der Batterie 2 des ersten Ausführungsbeispiels. Sie weist eine Anschluss-Druckplatte 406 auf, die der Anschluss-Druckplatte 6 des ersten Ausführungsbeispiels entspricht. Die Erzeugung der Druckkraft zur Herstellung des Klemmverbundes von Ableitern 14 und Distanzstücken 20 einschließlich Endstücken 21a, 21 b erfolgt von der Anschluss-Druckplatte 406 aus.

Die Anschluss-Druckplatte 406 der Batterie 402 dieses Ausführungsbeispiels weist eine Durchgangsbohrung 454 auf, die auf der Höhe des Endstücks 21 a (auf der anderen Seite wäre es das Endstück 21 b) mündet. Die Durchgangsbohrung 454 weist nach außen hin eine zylindrische Senkung 455 sowie in dessen nochmals aufgeweitetem Anlaufbereich ein Innengewinde 456 (Gewindeanlauf) auf. Das Innengewinde 456 ist vorzugsweise ein Feingewinde, insbesondere ein selbsthemmendes Gewinde.

In diesem Ausführungsbeispiel werden das Druckelement und das Druckvermittlungsglied durch eine Druckdose 424 gebildet, die einen Stößel 426 mit einem stirnseitig verbreiterten Stempel 426a antreibt.

Bei der Montage wird die Druckdose 424 in die Senkung 454 eingesetzt, wobei der Stempel 426 in die Durchgangsbohrung 454 ragt. Sodann wird die Senkung 455 durch einen Deckel 458 verschlossen. Der Deckel 458 weist ein Außengewinde 458a auf, das dem Innengewinde 456 in der Anschluss-Druckplatte 406 entspricht. Der Deckel 458 weist ferner zwei exzentrische Sacklöcher 458b auf, die der Aufnahme eines Abziehers zum Anziehen oder Lösen des Deckels dienen, und eine zentrale Öffnung 458c. Durch die zentrale Öffnung 458c hindurch verläuft eine Anschlussleitung 460 für die Druckdose 424.

Die Druckdose 424 kann auf vielfältige Weise ausgebildet sein; wesentlich ist, dass der Stempel mit vorbestimmtem, vorzugsweise steuerbarem Druck oder vorgegebenem Weg des Stößels 426 betätigbar ist. Der Antrieb kann elektromotorisch, elektromagnetisch, piezoelektrisch, hydraulisch oder pneumatisch sein; es kann auch ein Formgedächtnis-Bauteil als Bewegungselement verwendet werden. Wenn die Druckdose aktiviert wird, wird der Stößel 426 axial ausgefahren, und der Stempel 426a drückt auf das Endstück 21 a. So wird der Druckverbund aus Ableitern 14, Distanzstücken 20 und Endstücken 21 a, 21 b verspannt, und die Kontaktierungen werden zuverlässig angepresst. Besonders vorteilhaft ist die Druckdose 424 so ausgelegt, dass der Stößel im ausgefahrenen Zustand arretiert.

Die Druckdose 424 (mit Deckel 458 als Widerlager) bilden ein Druckelement, und der Stößel 426 mit dem Stempel 426a bildet ein Druckvermittlungsglied. Statt der Verwendung des Deckels 460 kann in einer Abwandlung dieses Ausführungsbeispiels auch die Druckdose 424 selbst einschraubbar sein, das Innengewinde 456 wäre dann länger, und die Senkung 455 könnte ggf. entfallen.

Fign. 18 bis 21 zeigen Einzelheiten und Gesamtansichten einer Batterie 502 mit einem weiteren Druckeinleitungskonzept als ein sechstes Ausführungsbeispiel.

Fig. 18 zeigt den gleichen Ausschnitt wie Fig. 16 oder Fig. 17 für die Batterie 502 dieses Ausführungsbeispiels. Fig. 19 zeigt den gleichen Bereich im Horizontalschnitt, geschnitten entlang einer Linie XIX-XIX in Fig. 18. Fig. 20 ist eine Querschnittsansicht der Batterie 502 zwischen zwei Zellen 4; die Ansicht entspricht Fig. 2. Fig. 21 ist eine Längsschnittansicht; die Ansicht entspricht in etwa Fig. 3.

Die Batterie 502 dieses Ausführungsbeispiels entspricht in ihrem grundlegenden Aufbau der Batterie 2 des ersten Ausführungsbeispiels. Druckplatten 506, 508 entsprechen den Druckplatten 6, 8 des ersten Ausführungsbeispiels. Distanzstücke 520 und Endstücke 521 a, 521 b entsprechen den Distanzstücken 20 und Endstücken 21 a, 21 b des ersten Ausführungsbeispiels. Anstelle von Axialbohrungen 40 wie bei den Distanzstücken 20 des ersten Ausführungsbeispiels weisen die Distanzstücke 520 dieses Ausführungsbeispiels rechteckige Schächte auf, in welchen quaderförmige oder riegelförmige Einsätze 522, 523a, 523b (entsprechend den Durchkontaktierungsbolzen 22, Kontaktbolzen 23a und Isolierbolzen 23b des ersten Ausführungsbeispiels) eingesetzt sind. Die Einleitung der Druckkraft zur Herstellung des Klemmverbundes von Ableitern und Distanzstücken erfolgt von der Anschluss-Druckplatte 506 aus.

In der Anschluss-Druckplatte 506 sind Taschen 506a ausgebildet, die der Aufnahme der Druckelemente und Druckvermittlungsglieder dienen. Die Distanzstücke 520, 521 a, 521 b erstrecken sich in diesem Ausführungsbeispiel höher als die Ableiter 14 und weisen, zusätzlich zu den Schächten 540, die der Aufnahme der Kontaktierungselemente 522, 523a, 523b dienen, weitere Axialbohrungen oberhalb der Ebene der Ableiter 14 auf.

Durch die zusätzlichen Axialbohrungen in den Distanzstücken 520, 521a, 521 b hindurch jeweils zwei Zuganker 524 oberhalb der Ableiter 14 der Zellen 4 der Batterie 502. Die Zuganker 524 stützen sich mit ihren Köpfen in entsprechend dimensionierten Ausnehmungen 508a der Gegendruckplatte 508 ab und erstrecken sich bis in die Tasche 506a der Anschluss-Druckplatte 506 hinein, wo sie in Muttern 525 enden. Die Zuganker 524 und die Muttern 525 bilden ein Druckelement zum Verspannen der Distanzstücke 520 und Endstücke 521a, 521 b in diesem Ausführungsbeispiel. Es sei erwähnt, dass die Zuganker 524 zusätzlich zu den Blockankern 10 vorgesehen sind. Zur Unterscheidung der Funktion von den Blockankern 10 werden die Zuganker 524 nachstehend auch als "Kontaktanker" 524 bezeichnet.

Ein Druckübertragungsglied wird durch eine Brücke 526 und Druckbolzen 527 gebildet. Die Druckbolzen 527 sitzen in Durchgangsbohrungen der Anschluss-Druckplatte 506 auf Höhe der Schächte 540 der Ableiter 14 und stoßen auf die Endstücke 521 a (bzw. 521 b auf der anderen Seite). Die Brücke 526 ist ein riegelförmiges Bauteil mit einer dem Batterieinneren zugewandten, in Querrichtung der Batterie 502 verlaufenden Auskehlung 526a. Durch die Auskehlung 526a sind zwei Auflagerlinien gebildet, von denen eine oberhalb der Kontaktanker 524 an der Wand der Tasche 506a liegt und die andere auf der Höhe der Druckbolzen 527. Die Kontaktanker 524 verlaufen unterhalb der oberen Auflagerlinie durch die Brücke 526 hindurch, und die Muttern 525 drücken von außen so auf die Brücke 526, dass die Kraftrichtung zwischen den beiden Auflagerlinien der Brücke 526 verläuft. Somit bildet die Brücke 526 einen Hebel, der die Zugkraft der Kontaktanker 524 auf die Druckbolzen 527 überträgt und somit den Verbund aus Ableitern 14 und Distanzstücken 520, 521 a, 521 b zuverlässig verspannt.

Gemäß der Darstellung in Fig. 20 weisen die Zellen 4 keine Vertiefungen (vgl. 32 in Fig. 2) an der Oberseite zur Aufnahme der Distanzstücke 520 auf. Die Distanzstücke 520, 521a, 521 b werden durch die Kontaktanker 524 in Ihrer Lage gehalten, sodass die genannten Vertiefungen entbehrlich sind.

Ebenso weisen die Zellen keine Rasten an der Unterseite auf. Vielmehr stehen die Zellen 4 auf den unteren Blockankern 10 auf. Die Blockanker 10 sind lange Zylinderschrauben, deren Köpfe in entsprechend dimensionierten Senkungen 506b der Anschluss-Druckplatte 506 sitzen und in Gewindelöchern 508b in der Gegendruckplatte 508 verschraubt sind (die Lage kann auch umgekehrt sein). Die Zuganker 524 sind mit bspw. Vierkant- oder Außenmehrzahnköpfen in der Gegenplatte drehfest gelagert und sind auf der Seite der Anschluss-Druckplatte 506 mit der Brücke 526 verschraubt. Alle Verschraubungen liegen oberhalb oder unterhalb der Konturen der Zellen 4 einschließlich der Ableiter 14. Auch die Polleitungen 28, 30 sind oberhalb der Ableiterebene geführt. Wenn alle Zuganker (Blockanker 10 und Kontaktanker 524) gelöst werden, können einzelne Zellen 4 aus dem Zellblock seitlich herausgezogen und ausgetauscht werden (Doppelpfeil "X" in Fig. 20). Die Distanzstücke können nicht herausfallen, da sie von den Kontaktankern gehalten werden.

Die Kontaktanker 524 sind unabhängig von den Blockankern 10, können deren Wirkung aber unterstützen. Mit anderen Worten, durch Anziehen der Kontaktanker 524 wird zusätzlicher Druck auf die Druckplatten 506, 508 ausgeübt, der zu der Verspannung des Zellblocks beiträgt. Da die Kontaktanker 524 aber nachträglich montiert werden, muss die Zugkraft der Blockanker 10 ausreichen, um den Zellblock aufrechtzuerhalten. Um dauernde einseitige Belastungen zu vermeiden, kann nach Montieren der Kontaktanker 524 oder kurz davor das Anzugsmoment der unten liegenden Blockanker 10 erhöht werden. Unter bestimmten Voraussetzungen können die oberen Blockanker 10 auch entfallen.

Obschon nicht näher dargestellt, kann durch geeignete Maßnahmen sichergestellt werden, dass die Montage nur von einer der Druckplatten 506, 508 aus erfolgen muss. Z.B. können die Zuganker 510 ebenfalls in Innengewinden in der Gegendruckplatte 508 verschraubt sein, und deren Köpfe können direkt auf der Brücke 526 sitzen, wo sie mit einem geeigneten Werkzeug angezugen werden.

In einer Abwandlung dieses Ausführungsbeispiels können die Kontaktanker zu im Wesentlichen zuglosen Führungsstangen für die Distanzstücke 520, 521 a, 521b verkümmern, während die Kontaktierung getrennt davon nach den Prinzipien der Fign. 1 bis 17 erfolgt. In diesem Fall kann auf die Brücken 526 verzichtet werden.

Bei dem vorstehenden Ausführungsbeispiel verlaufen die Kontaktanker durch Durchgangsbohrungen in den Druckplatten 506, 508 hindurch und sind so radial abgestützt. In einer weiteren Abwandlung weisen die Druckplatten 506, 508 anstelle der genannten Durchgangsbohrungen von oben verlaufende Schlitze auf, durch welche die Kontaktanker 524 nach oben entfernt werden können, und zwar samt den hierauf angeordneten Distanzstücken 520 und Endstücken 521a, 521b.

In einer weiteren Abwandlung weisen die Distanzstücke 520 und Endstücke 521 a, 521 b im Verlaufsbereich der Kontaktanker 524 Verdickungen derart auf, dass sich die Distanzstücke 520 und Endstücke 521 a, 521 b oberhalb der Ebene der Ableiter 14 berühren. Auf diese Weise wird ein in axialer Richtung stabiler Verbund der Distanzstücke 520 und Endstücke 521a, 521b geschaffen, und eine unerwünschte axiale Lockerung und Verschiebung der Distanzstücke 520 oder Endstücke 521a, 521 b beim Entfernen einzelner Zellen 4 kann vermieden werden. Auch wird so ein wirksames Widerlager gegen den Auflagedruck der Brücke 526 oberhalb der Ebene der Kontaktanker 524 gebildet, und unerwünschte Verformungen der Wandung der Tasche 506a können vermieden werden.

In einer weiteren Abwandlung dieses Ausführungsbeispiels können die Blockanker seitlich außerhalb der Zellen liegen. In diesem Fall können Zellen nach unten aus dem Zellblock herausgezogen und ausgetauscht werden.

In Fign. 22 und 23 ist ein Distanzstück 620 als ein weiteres Ausführungsbeispiel der Erfindung gezeigt. Dabei ist Fig. 22 eine Horizontalschnittansicht des Distanzstücks 620, und ist Fig. 23 eine Seitenansicht in Blickrichtung eines Pfeils XXIII in Fig. 22.

Das Distanzstück 620 in diesem Ausführungsbeispiel weist eine Isolierschicht 638a auf, die von zwei Leiterschichten 638b sandwichartig eingefasst ist. Dieser Schichtaufbau kann als der Grundkörper des Distanzstücks 620 bezeichnet werden. Die Leiterschichten 638b sind dünn im Vergleich zu der Isolierschicht 638a. Die Leiterschichten 638b bilden in Stapelrichtung der Batterie 2 gesehen die Vorder- und Rückseite des Distanzstücks 620, die mit den Stromableitern der Batteriezellen in Berührung stehen (in der Figur sind die Stromableiter 14 durch gestrichelte Linien angedeutet).

In jeder der seitlichen Flanken des Distanzstücks 620 sind zwei Sacklöcher 658 so ausgebildet, dass sie teilweise in der Isolierschicht 638a und teilweise einer der Leiterschichten 638b liegen. Die Sacklöcher 658 liegen auf einer horizontalen Ebene in Stapelrichtung hintereinander. So schneidet auf jeder Flanke des Distanzstücks 620 ein Sackloch 658 eine der Leiterschichten 638b und schneidet das andere Sackloch 658 die andere Leiterschichten 638b.

Die Leiterschichten 638b weisen keine elektrisch leitende Verbindung miteinander auf. Daher kann das Distanzstück 620, so wie es vorstehend beschrieben wurde, als nicht kontaktierendes Distanzstück 620 verwendet werden.

Durch eine Leiterbrücke 622, die in die Sacklöcher 658 in einer Flanke des Distanzstücks 620 eingesetzt wird, wird eine elektrisch leitende Verbindung zwischen den Leiterschichten 638b hergestellt. Mit der Leiterbrücke 622 kann das Distanzstück 620 als durchkontaktierendes Distanzstück 620 verwendet werden. Insbesondere bilden die Leiterschichten 638b und die Leiterbrücke 622 eine Durchkontaktierungseinrichtungtung.

Ein Stecker mit einem Pin 644 und einem Steckergehäuse 646 ist so ausgelegt, dass er in die Sacklöcher 658 in einer Flanke des Distanzstücks 620 passt. In dem Steckergehäuse 646 ist eine Feststellschraube 647 vorgesehen, mit welcher eine Polleitung 28/30 der Batterie 2 festklemmbar ist. Durch Einsetzen des Steckers 644, 646 in eines der Sacklöcher 658 (ohne Leiterbrücke 622) ist das Distanzstück 620 einseitig kontaktierend konfiguriert, denn über den Pin 644, ist eine elektrisch leitende Verbindung von einer der Leiterschichten 638b nach außerhalb des Distanzstücks 620 gegeben. Insbesondere bilden eine der Leiterschichten 638b und der Stecker 644, 646 eine einseitige Kontaktierungseinrichtung.

Das Distanzstück 620 dieses Ausführungsbeispiels ist so ausgelegt, dass auch sowohl eine Leiterbrücke 622 als auch ein Stecker 644, 646 zur Anwendung kommen können und so auch in durchkontaktierender Konfiguration des Distanzstücks 620 ein an dieser Stelle herrschendes Potential abgegriffen werden kann.

Es können auch mehrere Paare von Sacklöchern 658 auf wenigstens einer Flanke des Distanzstücks 620 dieses Ausführungsbeispiels angeordnet sein, um durch Einsatz mehrerer Leiterbrücken 622 einen größeren Leiterquerschnitt zu verwirklichen.

Die Sacklöcher 658 können gleiche oder unterschiedliche Durchmesser auf beiden Flanken des Distanzstücks 620 aufweisen.

Die Isolierschicht 638a ist ein Mittelabschnitt im Sinne der Erfindung, und die Leiterschichten 638b sind Außenabschnitte im Sinne der Erfindung. Die Sacklöcher 658 und die Ausnehmungen 662 sind Vertiefungen im Sinne der Erfindung.

Fig. 24 entspricht der Ansicht von Fig. 23 und zeigt eine Abwandlung des Distanzstücks 620 dieses Ausführungsbeispiels. Dabei sind Buchsen 662 an der Stelle der Sacklöcher (658, vgl. Fign. 22, 23) fest angeordnet. Der Innendurchmesser der Buchsen 662 ist an den Außendurchmesser der Steckerpins angepasst. Die Verwendung der Buchsen 662 trägt zur Verbesserung einer Leiterverbindung zwischen den Leiterschichten 638b und den Steckerpins 644 bei.

Fig. 25 entspricht der Ansicht von Fig. 23 und zeigt eine weitere Abwandlung des Distanzstücks 620 dieses Ausführungsbeispiels. Dabei sind in den Flanken des Distanzstücks 620 anstelle der Sacklöcher (658, vgl. Fign. 22, 23) Vertiefungen 662 rechteckigen Querschnitts jeweils in der einer Leiterschicht 638b zugewandten Fläche der Isolierschicht 638a ausgebildet. Die Vertiefungen 662 können als Taschen oder als durchgehende Nuten ausgebildet sein. In diesem Ausführungsbeispiel werden Stecker oder Brücken rechteckigen Leiterquerschnitts (nicht näher dargestellt) verwendet, die bei Einsetzen in die Vertiefungen 662 die jeweilige Leiterschicht 638b kontaktieren.

In weiteren Abwandlungen des Ausführungsbeispiels können die Bohrungen und/oder Vertiefungen zur Herstellung einer Kontaktierung zwischen den Leiterschichten 638b nur auf einer Seite angeordnet sein.

In weiteren Abwandlungen des Ausführungsbeispiels können die Bohrungen und/oder Vertiefungen zur Herstellung einer Kontaktierung zwischen den Leiterschichten 638b auch oder nur an der Oberseite des Distanzstücks 620 angeordnet sein.

In Fign. 26 bis 28 ist eine weitere Möglichkeit zur Druckeinleitung in die Abfolge von Stromableitern und Distanzstücken als ein weiteres Ausführungsbeispiel der Erfindung gezeigt. Dabei zeigt Fig. 26 ein Endstück 721 b in der Draufsicht, zeigt Fig. 27 das Endstück 721 b im Längsschnitt entlang einer Linie XXVII-XXVII in Fig. 26, und zeigt Fig. 28 das Endstück 721 b in einer Ansicht entsprechend Fig. 27 in einem aktivierten Zustand.

Das Endstück 721 b ist zwischen einem Stromableiter 14 und der Anschluss-Druckplatte 6 oder der Gegendruckplatte 8 der Batterie angeordnet. Das Endstück 721 b weist gemäß der Darstellung in Fig. 26 an seiner Oberseite zwei Gewindebohrungen 768 auf.

Fig. 27 zeigt einen Längsschnitt des Endstücks 721 b (als ein Längsschnitt wird im Rahmen dieser Anmeldung ein Schnitt in einer senkrechten Ebene verstanden, die parallel zur Stapelrichtung der Batterie verläuft) durch eine der Gewindebohrungen 768. Das Endstück 721 b wird durch einen quaderförmigen Grundkörper 764 gebildet. Von seiner Unterseite her verläuft eine Nut 766 quer von einer Flanke zur anderen Flanke. Die Nut 766 weist eine Querschnittsform auf, die sich von einem schmalen Schlitz an der Unterseite nach einwärts des Grundkörpers 768 bis zu einer Breite aufweitet, die dem Nenndurchmesser der Gewindebohrung 768 entspricht. Die Nut 766 endet in der oberen Hälfte des Endstücks 721b. Durch die Nut 766 werden in dem Grundkörper 764 zwei Schenkel 764a definiert, die von einem Oberteil des Grundkörpers 764 nach unten abragen.

Fig. 28 verdeutlicht, wie durch Einschrauben von Zylinderschrauben 770 in die Gewindebohrungen 768 die Schenkel 764a des Endstücks 721 b verdrängt und dadurch auseinandergedrückt werden. In einer Einbausituation in einer Batterie (2, vgl. Fign. 1-3, oder dergleichen) drücken die Schenkel 764a in axialer Richtung auf die Anordnung von Stromableitern und Distanzstücken und stellt so einen zuverlässigen Klemmverbund her. Der Druck kann durch die Einschraubtiefe der Zylinderschrauben 770 gut eingestellt werden.

Es können mehr als zwei Gewindebohrungen 768 vorhanden sein; gegebenenfalls reicht auch eine Gewindebohrung 768 aus.

Die Schenkel 764a können außen (also auf der Vorder- und Rückseite des Endstücks 721 a) leicht konvex gerundet sein, um die Druckeinleitung zu optimieren.

Das Funktions- und Konstruktionsprinzip der vorliegenden Erfindung ist mit wenigen Anpassungen auch auf Zellen mit an den seitlichen Flanken gegenüberliegenden Ableitern anwendbar.

In Weiterbildungen können alle Zuganker (Kontakt-, aber auch Blockanker) und/oder sonstige Spann- und Klemmelemente elektromotorisch, piezoelektrisch, hydraulisch, pneumatisch, über Formgedächtnis-Elemente oder dergleichen ferngesteuert gelöst und angezogen werden. Denkbar sind auch gemeinsame Betätigungen der Zuganker oder sonstigen Spann- und Klemmelemente über Hebel, Zahnstangen und Gelenke, Knebeloder Schneckentriebe.

Optional können ein automatisches Abschalten des Zellblocks bei Funktionsstörung (Übertemperatur, Überspannung, Spannungsabfall, etc.) sowie ein manueller oder automatischer Austausch einer Zelle im Störfall vorgesehen sein.

In einigen vorstehend beschriebenen Ausführungsbeispielen weisen die Distanzstücke eine einzige Axialbohrung 40 etwa in der Mitte ihrer Fläche auf. Es ist auch möglich, die Bohrung 40 (und damit die Lage der Kontaktierung) weiter nach außen oder nach innen zu verlegen, oder mehrere Bohrungen (und damit mehrere Kontaktierungsstellen) oder, wie im vierten Ausführungsbeispiel, Schächte 540 und Kontaktelemente rechteckigen Querschnitts vorzusehen.

Die Ausgestaltung der Ableiter 14 der Zellen 4 trägt zu der Erfindung insoweit bei, als sie zueinander im Wesentlichen flächenparallel von der Zelle abragen, die Hauptflächen der Ableiter im Wesentlichen senkrecht zu der Stapelrichtung ausgerichtet sind, die Ableiter einer Zelle einander in Stapelrichtung gesehen wenigstens teilweise (hier: zur Gänze) nicht verdecken, und jeder Ableiter einer Zelle jeweils einen Ableiter einer in Stapelrichtung folgenden Zellen in Stapelrichtung gesehen wenigstens teilweise (hier: zur Gänze) verdeckt. In einer Abwandlung der vorstehend beschriebenen, grundsätzlichen Ausführungsform können die Ableiter 14 einer Zelle 4 auch in einer Ebene nebeneinander angeordnet sein. In einer weiteren Abwandlung können sie, sofern sie in Dickenrichtung versetzt angeordnet sind, sich auch teilweise gegenseitig verdecken. Falls sich die Ableiter 14+, 14- einer Zelle 4 von der Stirnseite gesehen verdecken, können Bohrungen oder Durchbrüche in den Ableitern 14 vorgesehen sein, die im zusammengebauten Zellblock miteinander fluchten und durch welche die positive Polleitungen 28, 30 geführt werden können. Die Polleitungen 28 können unabhängig davon isoliert sein, um Kurzschlüsse zu vermeiden.

In einer weiteren Abwandlung kann, um eine polfalsche Anordnung zu erschweren, die streng symmetrische Anordnung der Ableiter 14 in wenigstens einer Hinsicht gebrochen sein; z.B. kann einer der Stromalbeiter 14+, 14- breiter als der andere sein. Wesentlich ist, dass die Ableiter einer Zelle einander in Stapelrichtung gesehen wenigstens teilweise nicht überdecken, sodass die Distanzstücke 20 zwischen den Ableitern 14 aufeinander folgender Zellen 4 anordenbar sind.

Die Ausgestaltung der Distanzstücke 20 und der Kontaktierungseinrichtungen 22, 23 erlaubt weitere Varianten. Wesentlich ist, dass die Distanzstücke 22 zwischen den Ableitern 14 angeordnet sind, die Kontaktierungseinrichtungen 22, 23 aufweisen und durch Druck von außen zwischen den Ableitern 14 eingeklemmt werden, wobei gleichzeitig der Kontakt dort sichergestellt wird, wo er vorgesehen ist. Die Distanzstücke können beispielsweise vollständig aus isolierendem oder Leitermaterial hergestellt sein; eine einseitige Kontaktierung (Abgreifen von Polpotential) kann dann z.B. durch isolierende Distanzstücke und zwischengeklemmte Leiterfahnen erfolgen.

In den vorstehend beschriebenen Ausführungsbeispielen wurde eine Batterie 2 durch acht Speicherzellen 4 gebildet, die in Reihe geschaltet sind. Es versteht sich, dass die Anzahl der Zellen 4 in der Batterie und ihre Verschaltung aufgrund von Vorgaben hinsichtlich Batteriespannung und -kapazität jede sinnvolle Konfiguration annehmen können.

In den vorstehend beschriebenen Ausführungsbeispielen sind die Speicherzellen 4 mit jeweils abwechselnder Polrichtung in dem Batterieblock eingebaut. In einer weiteren Abwandlung kann es vorgesehen sein, dass die Polrichtung der Zellen nicht nach jeder Zelle wechselt, sondern Paare oder größere Gruppen von aufeinanderfolgenden Zellen 4 mit jeweils gleicher Polrichtung eingebaut sind. Die Paare oder Gruppen können dann jeweils Parallelschaltungen bilden, und aufeinanderfolgende Paare oder Gruppen können in Reihe geschaltet werden. Hierzu können innerhalb eines Paares oder einer Gruppe die Ableiter gleicher Polarität, die auf der gleichen Seite hintereinander stehen, durch Kontaktelemente (Kontakthülsen, -schuhe oder -brücken) elektrisch verbunden werden. Am Übergang von einem Paar oder einer Gruppe zum nächsten Paar oder zur nächsten Gruppe werden auf einer Seite ein Kontaktelement und auf der anderen Seite ein Isolierelement eingesetzt. Ist ein Zellblock besonders hoher Kapazität gewünscht und reicht die Zellspannung einer einzelnen Zelle aus, so können auch alle Zellen in dem Block mit gleicher Polrichtung angeordnet und die Ableiter jeder Seite jeweils durch Kontaktelemente miteinander verbunden sein.

Vorstehend wurde die Erfindung anhand bevorzugter Ausführungsbeispielen und einiger Abwandlungen davon beschrieben. Es versteht sich, dass die konkreten Ausführungsbeispielen die beanspruchte Erfindung zwar illustrieren und exemplifizieren, aber nicht einschränken. Die Erfindung selbst ist allein durch das allgemeinste Verständnis der Patentansprüche definiert und beschränkt.

Die Speicherzellen 4 sind Elektroenergiezellen im Sinne der Erfindung; und die Batterien 2, 102, 202, 302 sind Elektroenergieeinheiten im Sinne der Erfindung. Der Stapel von Zellen 4 ist ein Zellblock im Sinne der Erfindung. Die Anschlussklemmen 18+, 18- sind Anschlusspole im Sinne der Erfindung. Plus und Minus sind Polaritäten im Sinne der Erfindung.

### Liste der Bezugszeichen:

- 2: Batterie
- 4: Speicherzelle
- 6: Anschluss-Druckplatte
- 8: Gegendruckplatte
- 10: Zuganker
- 12: Mutter
- 14+, 14-: Positiver, Negativer Ableiter
- 16: Klemmentasche
- 18+, 18-: Positive, Negative Anschlussklemme
- 20: Distanzstück
- 21a, 21b: Endstücke
- 22: Durchkontaktierungseinrichtung (Bolzen)
- 23: Einseitige Kontaktierungseinrichtung
- 23a: Kontaktbolzen
- 23b: Isolierbolzen
- 24: Druckelement
- 26: Druckübertragungsglied
- 28+, 28-: Positive, Negative Polleitung (erste Gruppe A)
- 30+, 30-: Positive, Negative Polleitung (zweite Gruppe B)
- 32: Vertiefung
- 34, 35: Absatz
- 36: Raste
- 38: Grundkörper
- 40: Axialbohrung
- 42: Querbohrung
- 44: Verbindungsstift
- 46: Buchse
- 54: Führungsöffnung

- 120: Distanzstück (zweites Ausführungsbeispiel)
- 122: Kontaktblech (beidseitig)
- 123: Kontaktblech (einseitig)
- 138: Grundkörper
- 144: Kabelschuh
- 148: Vertiefung
- 149: Rand
- 150: Gewindesackbohrung
- 152: Schraube

- 220: Distanzstück (drittes Ausführungsbeispiel)
- 222: Kontaktblech (beidseitig)
- 223: Kontaktblech (einseitig)
- 238: Grundkörper
- 240: Schlitz
- 242: Quernut
- 244: Kabelschuh
- 248: Vertiefung
- 249: Rand
- 250: Gewindebohrung
- 251: Zylindersenkung
- 252: Schraube

- 302: Batterie (viertes Ausführungsbeispiel)
- 306: Stirnplatte
- 324: Druckschraube
- 324a: Schraubengewindekopf
- 324b: Außengewinde
- 324c: Innensechskant
- 326: (Pass-)Zapfen
- 326a: Fase
- 354: (Pass-)Bohrung
- 356: Gewindesenkbohrung

- 402: Batterie (fünftes Ausführungsbeispiel)
- 406: Stirnplatte
- 424: Druckelement
- 426: Druckstange
- 426a: Endscheibe
- 454: Durchbohrung
- 455: Senkung
- 456: Gewindeanlauf
- 458: Deckel
- 458a: Außengewinde
- 458b: Sackloch
- 458c: Durchgangsbohrung
- 460: Zuleitung

- 502: Batterie (sechstes Ausführungsbeispiel)
- 504: Batteriezelle
- 506: Anschluss-Druckplatte
- 506a: Tasche
- 506b: Senkung
- 508: Gegendruckplatte
- 508a: Ausnehmung
- 508b: Gewindebohrung
- 520: Distanzstück
- 521a, 521b: Endstück
- 522: Riegel
- 523a: Kontaktriegel
- 523b: Isolierriegel
- 524: Kontaktanker
- 525: Mutter
- 526: Brücke
- 527: Druckbolzen
- 540: Schacht

- 620: Distanzstück (siebentes Ausführungsbeispiel)
- 622: Leiterbrücke
- 638a: Isolierschicht
- 638b: Leiterschicht
- 644: Steckerpin
- 646: Steckergehäuse
- 647: Feststellschraube
- 658: Sackloch
- 660: Buchse (Abwandlung)
- 662: Ausnehmung (Abwandlung)

- 721b: Endstück (achtes Ausführungsbeispiel)
- 764: Grundkörper
- 764a: Schenkel
- 766: Nut
- 768: Gewindebohrung
- 770: Zylinderschraube

- i, ii, ..., viii: Zähler für Zellen 4
- A, B: Gruppen von Zellen 4

Es wird ausdrücklich darauf hingewiesen, dass vorstehende Bezugszeichenliste integraler Bestandteil der Beschreibung ist.

## Patentansprüche

1. Elektroenergieeinheit (2, 302, 402, 502) mit einer Mehrzahl von Elektroenergiezellen (4, 504), die in einer Stapelrichtung zu einem Zellblock gestapelt und innerhalb des Zellblocks parallel und/oder in Reihe miteinander verschaltet sind, wobei die Elektroenergiezellen (4, 504) flächig ausgebildete Ableiter (14+, 14-) aufweisen, die zueinander flächenparallel von der Zelle (4, 504) abragen, wobei die Hauptflächen der Ableiter (14+, 14-) senkrecht zu der Stapelrichtung ausgerichtet sind, wobei die Ableiter (14+, 14-) einer Zelle (4, 504) einander in Stapelrichtung gesehen wenigstens teilweise nicht verdecken, wobei jeder Ableiter (14+, 14-) einer Zelle (4, 504) jeweils einen Ableiter (14+, 14-) einer in Stapelrichtung folgenden Zellen (4, 504) in Stapelrichtung gesehen wenigstens teilweise verdeckt, wobei die elektrische Verschaltung zwischen gegenüberliegenden Ableitern (14+, 14-) durch Durchkontaktierungseinrichtungen (22) aufweisende durchkontaktierende Distanzstücke (20, 120, 220, 520, 620) hergestellt wird, die in Zwischenräumen zwischen Ableitern (14+, 14-) aufeinanderfolgender Zellen (4, 504) angeordnet sind, wobei die Distanzstücke (20, 120, 220, 520, 620) durch eine Druckkraft mittels einer Spanneinrichtung zwischen den Ableitern (14+, 14-) eingeklemmt werden, wobei die Spanneinrichtung vollständig außerhalb der Ableiter (14+, 14-) angeordnet ist, **dadurch gekennzeichnet, dass** die Durchkontaktierungseinrichtungen (22) einen elektrisch leitenden Durchkontaktierungsbolzen aufweisen, welcher in einer Axialbohrung (40) des Distanzstückes (20) aufgenommen ist und welcher sich über die gesamte Länge des Distanzstückes (20) erstreckt.

2. Elektroenergieeinheit (2, 302, 402, 502) nach Anspruch 1, **dadurch gekennzeichnet, dass** die Spanneinrichtung Krafterzeugungselemente zum Erzeugen einer Kraft aufweist, wobei die Krafterzeugungselemente direkt in Stapelrichtung auf die Anordnung von Ableitern (14+, 14-) und Distanzstücken (20, 120, 220, 520, 620) wirken.

3. Elektroenergieeinheit (2, 302, 402, 502) nach Anspruch 1, **dadurch gekennzeichnet, dass** die Spanneinrichtung Krafterzeugungselemente zum Erzeugen einer Kraft und Kraftübertragungselemente aufweist, wobei die Kraftübertragungselemente die von den Krafterzeugungselementen ausgeübte Kraft auf die Anordnung von Ableitern (14+, 14-) und Distanzstücken (20, 120, 220, 520, 620) übertragen.

4. Elektroenergieeinheit (2, 302, 402, 502) nach Anspruch 1, **dadurch gekennzeichnet, dass** die Spanneinrichtung Zugstäbe, die an den Ableitern vorbei über die Länge des Stapels verlaufen, und Klemmelemente aufweist, wobei die Klemmelemente eine von den Zugstäben ausgeübte Kraft auf eine die Ableiter (14+, 14-) schneidende Ebene übertragen.

5. Elektroenergieeinheit (2, 302, 402, 502) nach Anspruch 4, **dadurch gekennzeichnet, dass** die Zugstäbe durch Bohrungen in den Distanzstücken (20, 120, 220, 520, 620) hindurch verlaufen.

6. Elektroenergieeinheit (2, 302, 402, 502) nach Anspruch 1, **dadurch gekennzeichnet, dass** die Spanneinrichtung wenigstens einen Steller aufweist, wobei eine Stellkraft des Stellers direkt oder über Hebel, Gelenke oder dergleichen in Stapelrichtung von außen auf die Anordnung von Ableitern und Distanzstücken (20, 120, 220, 520, 620) wirkt.

7. Elektroenergieeinheit (2, 302, 402, 502) nach Anspruch 6, **dadurch gekennzeichnet, dass** der Steller mechanisch, insbesondere manuell, oder elektromotorisch, elektromagnetisch, hydraulisch, pneumatisch, piezoelektrisch ansteuerbar ist.

8. Elektroenergieeinheit (2, 302, 402, 502) nach einem der vorstehenden Ansprüche, **dadurch gekennzeichnet, dass** ein an einen Ableiter (14+, 14-) grenzendes Distanzstück (20, 120, 220, 520, 620) eine Abgreifeinrichtung aufweist, welche eine elektrische Verbindung mit dem Ableiter (14+, 14-) herstellt.

9. Elektroenergieeinheit (2, 302, 402, 502) nach einem der vorstehenden Ansprüche, **dadurch gekennzeichnet, dass** ein erster Anschlusspol und ein zweiter Anschlusspol der Elektroenergieeinheit (2, 302, 402, 502) vorgesehen sind, wobei der erste Anschlusspol mit einem Ableiter (14+) einer ersten Polarität der ersten Zelle in dem Zellblock verbunden ist, und wobei der zweite Anschlusspol mit einem Ableiter (14-) einer zweiten Polarität der letzten Zelle in dem Zellblock verbunden ist.

10. Elektroenergieeinheit (2, 302, 402, 502) nach Anspruch 8, **dadurch gekennzeichnet, dass** die Zellen (4, 504) in Stapelrichtung mit abwechselnder Polrichtung angeordnet sind.

11. Elektroenergieeinheit (2, 302, 402, 502) nach einem der Ansprüche 8 bis 10, **dadurch gekennzeichnet, dass** der Zellblock aus den mehreren Zellen (4, 504) zwischen zwei Druckplatten (6, 8, 306, 406, 506) eingespannt ist, wobei die Druckplatten (6, 8, 306, 406, 506) vorzugsweise mittels Zugankern verspannt sind.

12. Elektroenergieeinheit (2, 302, 402, 502) nach einem der vorstehenden Ansprüche, **dadurch gekennzeichnet, dass** die Elektroenergiezellen (4, 504) galvanische Zellen, vorzugsweise eine Sekundärzellen sind, wobei insbesondere ein elektromagnetisch aktives Material der Zellen Lithium oder eine Lithiumverbindung aufweist.

## Claims

1. An electrical energy unit (2, 302, 402, 502) comprising a plurality of electrical energy cells (4, 504) stacked in a stacking direction to form a cell block and interconnected within the cell block in parallel and/or in series connection, wherein the electrical energy cells (4, 504) comprise planar conductors (14+, 14-) which protrude from the cell (4, 504) surface-parallel to one another, wherein the main surfaces of the conductors (14+, 14-) are oriented perpendicular to the stacking direction, wherein the conductors (14+, 14-) of a cell (4, 504) at least in part do not cover each another as viewed in the stacking direction, wherein each conductor (14+, 14-) of a cell (4, 504) at least partially covers a conductor (14+, 14-) of a subsequent cell (4, 504) in the stacking direction as viewed in said stacking direction, wherein the electrical connection between opposite conductors (14+, 14-) is produced by spacers (20, 120, 220, 520, 620) comprising through connecting devices (22) disposed in the interspaces between conductors (14+, 14-) of consecutive cells (4, 504), wherein the spacers (20, 120, 220, 520, 620) are clamped between the conductors (14+, 14-) by a compressive force from a clamping device, wherein the clamping device is arranged completely externally of the conductors (14+, 14-), **characterized in that** the through connecting devices (22) comprise an electrically conductive through connecting pin which is received in an axial bore (40) of the spacer (20) and which extends over the entire length of the spacer (20).

2. The electrical energy unit (2, 302, 402, 502) according to claim 1, **characterized in that** the clamping device comprises force-generating elements to generate a force, wherein the force-generating elements act directly on the arrangement of conductors (14+, 14-) and spacers (20, 120, 220, 520, 620) in the stacking direction.

3. The electrical energy unit (2, 302, 402, 502) according to claim 1, **characterized in that** the clamping device comprises force-generating elements to generate a force and force-transmitting elements, wherein the force-transmitting elements transmit the force exerted on the arrangement of conductors (14+, 14-) and spacers (20, 120, 220, 520, 620) by the force-generating elements.

4. The electrical energy unit (2, 302, 402, 502) according to claim 1, **characterized in that** the clamping device comprises tension rods, which extend past the conductors over the length of the stack, and clamping elements, wherein the clamping elements transmit a force exerted by the tension rods to a plane traversing the conductors (14+, 14-).

5. The electrical energy unit (2, 302, 402, 502) according to claim 4, **characterized in that** the tension rods run through bore holes in the spacers (20, 120, 220, 520, 620).

6. The electrical energy unit (2, 302, 402, 502) according to claim 1, **characterized in that** the clamping device comprises at least one actuator, wherein an actuating force of the actuator acts on the arrangement of conductors and spacers (20, 120, 220, 520, 620) in the stacking direction either directly or via levers, joints or the like.

7. The electrical energy unit (2, 302, 402, 502) according to claim 6, **characterized in that** the actuator can be controlled mechanically, particularly manually, or electromotively, electromagnetically, hydraulically, pneumatically or piezoelectrically.

8. The electrical energy unit (2, 302, 402, 502) according to any one of the preceding claims, **characterized in that** a spacer (20, 120, 220, 520, 620) abutting a conductor (14+, 14-) comprises a tapping device which establishes an electrical connection to the conductor (14+, 14-).

9. The electrical energy unit (2, 302, 402, 502) according to any one of the preceding claims, **characterized in that** a first connecting pole and a second connecting pole of the electrical energy unit (2, 302, 402, 502) are provided, wherein the first connecting pole is connected to a conductor (14+) of a first polarity of the first cell in the cell block and wherein the second connecting pole is connected to a conductor (14-) of a second polarity of the last cell in the cell block.

10. The electrical energy unit (2, 302, 402, 502) according to claim 8, **characterized in that** the cells (4, 504) are arranged in the stacking direction with alternating pole directions.

11. The electrical energy unit (2, 302, 402, 502) according to any one of claims 8 to 10, **characterized in that** the cell block of the plurality of cells (4, 504) is clamped between two pressure plates (6, 8, 306, 406, 506), wherein the pressure plates (6, 8, 306, 406, 506) are tensioned, preferably by means of tension rods.

12. The electrical energy unit (2, 302, 402, 502) according to any one of the preceding claims, **characterized in that** the electrical energy cells (4, 504) are galvanic cells, preferably secondary cells, wherein in particular an electromagnetically active material of the cells comprises lithium or a lithium compound.

## Revendications

1. Unité d'énergie électrique (2, 302, 402, 502) comportant une pluralité de cellules d'énergie électrique (4, 504) empilées dans un dispositif d'empilement pour former un bloc de cellules et connectées les unes aux autres en parallèle et/ou en série à l'intérieur dudit bloc de cellules, lesdites cellules d'énergie électrique (4, 504) comportant des conducteurs plans (14+, 14-) qui, les uns par rapport aux autres, dépassent de manière plane et parallèle au-delà de la cellule (4, 504), les surfaces principales des conducteurs (14+, 14-) étant orientées perpendiculairement à la direction d'empilement, lesdits conducteurs (14+, 14-) d'une cellule (4, 504) ne se recouvrant pas au moins partiellement dans la direction d'empilement, chaque conducteur (14+, 14-) d'une cellule (4, 504) recouvrant au moins partiellement dans la direction d'empilement respectivement un conducteur (14+, 14-) de l'une des cellules (4, 504) suivantes dans la direction d'empilement, la mise en contact électrique entre des conducteurs (14+, 14-) face à face étant réalisée par des écarteurs (20, 120, 220, 520, 620) comprenant des dispositifs de mise en contact (22), les écarteurs (20, 120, 220, 520, 620) étant disposés dans les intervalles entre les conducteurs (14+, 14-) de cellules (4, 504) se succédant, lesdits écarteurs (20, 120, 220, 520, 620) étant bloqués entre les conducteurs (14+, 14-) sous l'effet d'une force de pression appliquée par un dispositif de serrage, ledit dispositif de serrage étant disposé complètement en dehors des limiteurs de surtension (14+, 14-), **caractérisée en ce que** les dispositifs de mise en contact (22) comportent un boulon électroconducteur, logé dans une forure axiale (40) de l'écarteur (20) et s'étendant sur toute la longueur de l'écarteur (20).

2. Unité d'énergie électrique (2, 302, 402, 502) selon la revendication 1, **caractérisée en ce que** le dispositif de serrage comporte des éléments de production de force pour générer une force, lesdits éléments de production de force agissant directement dans la direction d'empilement sur l'agencement de conducteurs (14+, 14-) et d'écarteurs (20, 120, 220, 520, 620).

3. Unité d'énergie électrique (2, 302, 402, 502) selon la revendication 1, **caractérisée en ce que** le dispositif de serrage comporte des éléments de production de force pour générer une force et des éléments de transmission de force, lesdits éléments de transmission de force transmettant sur l'agencement de conducteurs (14+, 14-) et d'écarteurs (20, 120, 220, 520, 620) la force exercée par les éléments de production de force.

4. Unité d'énergie électrique (2, 302, 402, 502) selon la revendication 1, **caractérisée en ce que** le dispositif de serrage comporte des tiges de traction qui s'étendent le long des conducteurs sur toute la longueur de la pile, et des éléments de serrage, lesdits éléments de serrage transmettant sur un plan de coupe des conducteurs (14+, 14-) une force exercée par les tiges de traction.

5. Unité d'énergie électrique (2, 302, 402, 502) selon la revendication 4, **caractérisée en ce que** les tiges de traction s'étendent à travers des forures dans les écarteurs (20, 120, 220, 520, 620).

6. Unité d'énergie électrique (2, 302, 402, 502) selon la revendication 1, **caractérisée en ce que** le dispositif de serrage comporte au moins un vérin, une force de réglage du vérin agissant directement ou par l'intermédiaire de leviers, engrenages ou éléments similaires dans la direction d'empilement de l'extérieur sur l'agencement de conducteurs (14+, 14-) et d'écarteurs (20, 120, 220, 520, 620).

7. Unité d'énergie électrique (2, 302, 402, 502) selon la revendication 6, **caractérisée en ce que** le vérin peut être commandé par voie mécanique, en particulier manuellement, ou par un moteur électrique, par voie électromagnétique, hydraulique, pneumatique, piézoélectrique.

8. Unité d'énergie électrique (2, 302, 402, 502) selon l'une quelconque des revendications précédentes, **caractérisée en ce qu'**un écarteur (20, 120, 220, 520, 620) adjacent à un conducteur (14+, 14-) comporte un dispositif de prélèvement qui établit une liaison électrique avec le conducteur (14+, 14-).

9. Unité d'énergie électrique (2, 302, 402, 502) selon l'une quelconque des revendications précédentes, **caractérisée en ce qu'**il est prévu un premier pôle de connexion et un deuxième pôle de connexion de l'unité d'énergie électrique (2, 302, 402, 502), ledit premier pôle de connexion étant relié à un conducteur (14+) avec une première polarité de la première cellule dans le bloc de cellules, et ledit deuxième pôle de connexion étant relié à un conducteur (14-) avec une deuxième polarité de la dernière cellule dans le bloc de cellules.

10. Unité d'énergie électrique (2, 302, 402, 502) selon la revendication 8, **caractérisée en ce que** les cellules (4, 504) sont disposées dans la direction d'empilement avec un sens de pôle alternant.

11. Unité d'énergie électrique (2, 302, 402, 502) selon l'une quelconque des revendications 8 à 10, **caractérisée en ce que** le bloc de cellules constitué par la pluralité de cellules (4, 504) est serré entre deux plaques de pression (6, 8, 306, 406, 506), lesdites plaques de pression (6, 8, 306, 406, 506) étant bloquées de préférence par des tirants.

12. Unité d'énergie électrique (2, 302, 402, 502) selon l'une quelconque des revendications précédentes, **caractérisée en ce que** les cellules d'énergie électrique (4, 504) sont des cellules galvaniques, de préférence une cellule secondaire, dans lesquelles en particulier un matériau, actif sur le plan électromagnétique, contient du lithium ou un composé de lithium.
